# EUROPEAN PATENT APPLICATION

(11) **EP 1 635 567 A1**
(43) Date of publication of application: **15.03.2006**
(21) Application number: 04733966.8
(22) Date of filing: 19.05.2004
(51) Int. Cl.: H04N 5/91, H04N 5/907, H04N 5/225

(54) **METHOD FOR MANAGING RECORDING APPARATUS AND RECORDING MEDIUM**

(30) Priority: 18.06.2003 JP 2003172779
(71) Applicant: SONY CORPORATION, Tokyo 141-0001 (JP)
(72) Inventor: Yoshida, Chisato; c/o Sony Corporation, Tokyo; 1410001 (JP)
(74) Representative: Leppard, Andrew John
(86) International application number: PCT/JP2004/007147
(87) International publication number: WO 2004/114656

(57) **Abstract**

This invention relates illustratively to a digital still camera. The inventive device is arranged to accept a first managing criterion regarding the number of pictures to be taken or the recording time for recording them on a piece of media, and a second managing criterion corresponding to an integral multiple of the recording size determined by the first managing criterion, the two criteria being used to manage the recording of data to the media with ease.

## Description

### Technical Field

The present invention relates generally to a recording apparatus and a recording medium managing method, and more particularly to a digital still camera. The inventive apparatus and method permit acceptance of a first managing criterion representing the number of pictures that may be taken or the recording time for recording them on a piece of media, and a second managing criterion representative of an integral multiple of the recording size determined by the first managing criterion, the two criteria being used to manage the recording of data to the media more easily than before.

### Background Art

Heretofore, the length of film used by film cameras has been expressed in increments of exposures (e.g., 24- and 36-exposure film) representative of pictures to be taken. Each picture when taken consumes one increment of the film that constitutes the recording medium of the film camera. Likewise, the length of magnetic tapes for use on video tape recorders has been expressed by a recordable time based on the amount of the medium consumed by recording per unit time, such as 120- or 90-minute tapes. These arrangements have allowed users of the film camera and video tape recorder to grasp and manage intuitively the sizes of storage media and their progressively diminishing recordable capacities.

Meanwhile, digital still cameras are known for the resolutions of pictures taken varying with the camera type and user settings. In addition, each still picture taken by the digital still camera has its data size varied appreciably depending on the data compression rate in use. On the digital still camera, a single piece of recording media is arranged to accommodate a large number of pictures taken.

Illustratively, if pictures taken with 2 million pixels are compressed in "fine" compression mode, the data size per still picture is about 610 kilobytes; if pictures taken with 300,000 pixels (VGA: Video Graphics Array) are compressed in fine compression mode, the data size per still picture is about 98 kilobytes. It follows that a 256-megabyte memory card can record up to about 420 still pictures taken with 2 million pixels or about 2,610 still pictures taken with 300,000 pixels in fine compression mode.

Digital still cameras are designed illustratively to calculate a unit data size consumed by each still picture on a recording medium by taking a selected picture resolution and data compression rate into account. The available capacity of the recording medium is divided by the unit data size thus obtained, to give the number of pictures that may be recorded. The recordable picture count is then presented to the user for recording medium management purposes.

Some digital still cameras are designed to record moving pictures in addition to still pictures. The moving pictures when taken are recorded typically following their compression using the MPEG (Moving Picture Experts Group) standard.

Japanese Patent Laid-open No. 2001-298647 proposes a scheme whereby recording media are marketed after having parameters such as transfer bit rates recorded thereon, so that the capacity of the media may be managed in terms of recordable times based on their recorded parameters.

Japanese Patent Laid-open No. 2002-175146 proposes a technique for calculating a data compression rate based on a predetermined number of pictures to be taken, the data compression rate being used to compress the taken pictures for recording. The proposed technique envisages managing recording media in terms of the previously-established picture count, just like film cameras that have pictures taken and recorded on the film loaded therein.

Digital still cameras can be equipped with a memory card of a large capacity. Such a memory card allows the user to take desired pictures without worrying about the remaining memory capacity. This is an advantage over conventional film cameras.

However, the use of removable media such as large-capacity memory cards can make management of recording media with digital still cameras more difficult than with film cameras. That is because a single piece of media can accommodate hundreds to thousands of pictures as mentioned above. Illustratively, users of film cameras carry with them rolls of film when going on a trip. Rolls of film are typically changed as needed every day of the trip. The film rolls are thus used as the base unit for managing the pictures taken. The users also know the remaining recordable capacity by simply counting the remaining rolls of film at hand. By contrast, users of digital still cameras are unable to manage their recording media intuitively because a single piece of media can store all the pictures taken on the trip.

Besides recording data to the removable media, digital still cameras may be arranged to record data to a network server or the like when connected to the network. The network server typically has a recording capacity far greater than that of removable media. Some removable media such as optical disks have a larger recording capacity than the memory cards. In such cases, the number of pictures that may be recorded becomes larger than ever before. Hence the growing difficulty in managing all that has been recorded.

The above-cited disclosures of Japanese Patent Publications Nos. 2001-298647 and 2002-175146 are also faced with the same problem because they also involve managing recording media in terms of the number of pictures taken or the recording time for recording them. Furthermore, because different types of digital still cameras have different resolution settings and because users may modify data compression rates as desired, the scheme proposed by Japanese Patent Publication No. 2001-298647 for marketing recording media with previously stored recordable time setting may not be practicable.

Similar difficulties are experienced when moving pictures are recorded by digital still cameras. Illustratively, users of conventional video tape recorders carry with them tape cassettes when going on a trip. Tape cassettes are typically changed as needed every day of the trip, so that the cassettes are used as the base unit for managing the moving pictures taken. The users know the remaining recordable capacity by simply counting the remaining tape cassettes at hand. By contrast, users of digital still cameras taking moving pictures are unable to benefit from such intuitive media management.

### Disclosure of Invention

The present invention has been made in view of the above circumstances and provides a recording apparatus and a recording medium managing method for managing recording media more easily than before.

In carrying out the present invention and according to one embodiment thereof, there is provided a recording apparatus for recording pictures taken to a recording medium, the recording apparatus including a setting accepting means for accepting a first managing criterion set as a reference recording size for use in recording the pictures taken to the recording medium, and a second managing criterion set as another reference recording size formed by an integral multiple of the reference recording size under the first managing criterion.

The inventive structure above constitutes a recording apparatus that records pictures taken to the recording medium used in combination therewith. The apparatus has the setting accepting means that accepts the first managing criterion established as a reference recording size for use in writing the pictures taken to the recording medium, and the second managing criterion established as another reference recording size composed of an integral multiple of the reference recording size determined in accordance with the first managing criterion. Resorting to the first and the second managing criteria allows the inventive recording apparatus to manage the recording medium in a manner substantially similar to film cameras or video tape recorders. For its part, the film camera manages the consumed volume of the loaded film by checking the number of pictures taken so far, before having rolls of film changed as needed; the video tape recorder manages the consumed volume of the loaded tape cassette by checking the remaining recordable time, before having cassettes changed as needed. When operating in ways analogous to the traditional film camera or video tape recorder, the recording apparatus of the invention allows the recording medium that records still or moving pictures to be managed more easily than before.

According to another embodiment of the present invention, there is provided a recording medium managing method including the steps of: accepting a first managing criterion set as a reference recording size for use in recording input signals to a recording medium, and a second managing criterion set as another reference recording size formed by an integral multiple of the reference recording size under the first managing criterion; and managing the recording of the input signals in reference to the first and the second managing criteria.

The inventive recording medium managing method above also permits easier management of recording media than before.

### Brief Description of the Drawings

FIG. 1 is a block diagram of a digital still camera practiced as a first embodiment of this invention;
FIG. 2 is a flowchart of steps carried out by a central processing unit of the digital still camera in FIG. 1;
FIG. 3 is a plan view showing a display screen reflecting the managing criteria established by the process of FIG. 2;
FIG. 4 is a flowchart of steps constituting a picture count setting process as part of the process in FIG. 2;
FIG. 5 is a plan view of an input screen in pixel count priority mode used by the process of FIG. 4;
FIG. 6 is a tabular view showing relations between pixel counts and data compression modes, the relations being used to explain the input screen of FIG. 5;
FIG. 7 is a plan view of an input screen in picture quality priority mode used by the process of FIG. 4;
FIG. 8 is a plan view of an input screen in automatic setting mode used by the process of FIG. 4;
FIG. 9 is a tabular view showing data sizes for explaining the input screen of FIG. 8;
FIG. 10 is a plan view of an input screen through which to enter roll names in the process of FIG. 2;
FIG. 11 is a schematic view for explaining management data recorded by the process of FIG. 2;
FIG. 12 is a tabular view showing part of the content of the management data in FIG. 11;
FIG. 13 is a flowchart of steps carried out by the digital still camera of FIG. 1 to set the first and second managing criteria with regard to moving pictures;
FIG. 14 is a plan view of a display screen reflecting the managing criteria established by the process of FIG. 13;
FIG. 15 is a plan view of an input screen in pixel count priority mode used by the process of FIG. 13;
FIG. 16 is a tabular view showing relations between pixel counts and data compression modes, the relations being used to explain the input screen of FIG. 13;
FIG. 17 is a plan view of an input screen in picture quality priority mode used by the process of FIG. 13;
FIG. 18 is a plan view of an input screen in automatic setting mode used by the process of FIG. 13;
FIG. 19 is a flowchart of steps constituting an alternative setting process as part of the process in FIGS. 2 and 13;
FIG. 20 is a plan view of an input screen on a digital still camera practiced as a second embodiment of the invention, the screen being in contrast with the input screen of FIG. 5;
FIG. 21 is a plan view of another input screen on the digital still camera as the second embodiment of the invention, the screen being in contrast with the input screen of FIG. 7;
FIG. 22 is a plan view of an input screen on a digital still camera practiced as a third embodiment of the invention;
FIG. 23 is a schematic view for explaining how moving pictures are processed by a digital still camera practiced as a fourth embodiment of the invention; and
FIG. 24 is a block diagram showing a typical structure of a server practiced as a fifth embodiment of the invention.

### Best Mode for Carrying out the Invention

Preferred embodiment of this invention will now be described in detail with reference to the accompanying drawings.

### (1) First embodiment

### (1-1) Structure of the first embodiment

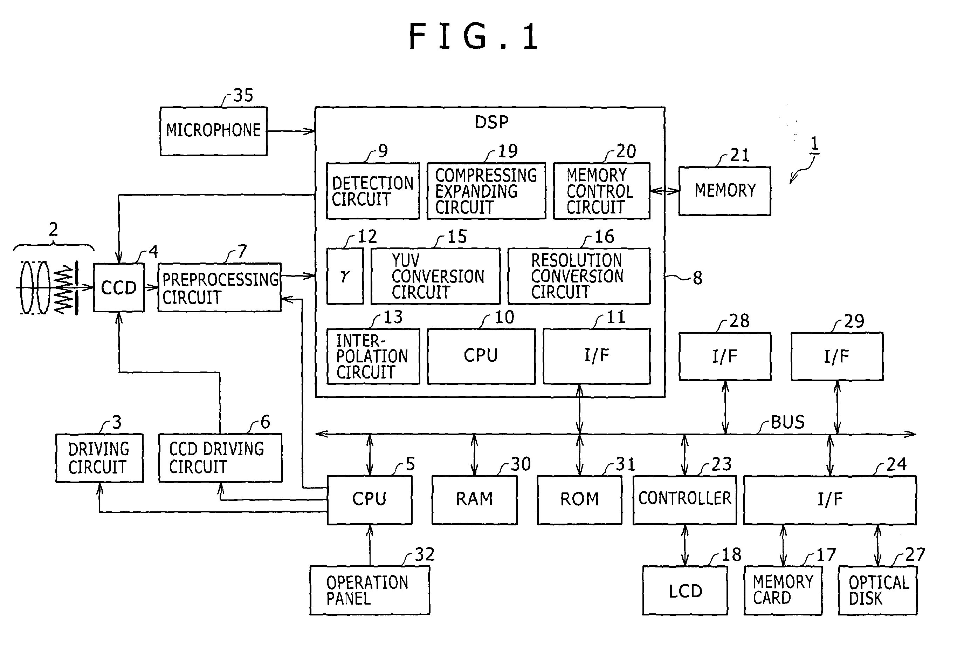

FIG. 1 is a block diagram of a digital still camera practiced as the first embodiment of this invention. In this digital still camera 1, an optical system 2 varies the focus, aperture and zoom settings using a driving circuit 3 to converge incident light onto an image pickup plane of a CCD (charge coupled device) imaging device 4. Under control of a central processing unit (CPU) 5, the driving circuit 3 drives the zoom and focus lenses of the optical system 2 and adjusts the aperture setting. Also under control of the CPU 5, the driving circuit 3 regulates a mechanical shutter incorporated in the optical system 2.

In response to a timing signal coming from a CCD driving circuit 6, the CCD imaging device 4 subjects the pictures formed on the image pickup plane to photoelectric conversion and outputs the converted data. In its normal operation, the CCD imaging device 4 outputs the pictures taken as moving pictures. When the user presses the shutter release, the CPU 5 causes the CCD driving circuit 6 to change timing signals. The changed timing signal causes the CCD imaging device 4 to output a still picture at a resolution higher than that of the moving pictures taken so far. It is under control of the CPU 5 that the CCD driving circuit 6 outputs various timing signals necessary for operating the CCD imaging device 4. In the first embodiment of this invention, the changeover in resolution between moving and still pictures is effected by either performing or not performing a so-called vertical-direction thinning-out process.

A preprocessing circuit 7 receives the pictures output by the CCD imaging device 4 through correlated double sampling process, converts the output pictures into repetitions of color signals corresponding to the color filters arrayed on the image pickup plane of the CCD imaging device 4, and divides what has been converted into individual color signals. The preprocessing circuit 7 further causes an AGC (automatic gain control) circuit to correct the levels of the color signals using the gains designated by the CPU 5, and coverts the corrected signals from analog to digital format before outputting the converted signals.

A digital signal processor (DSP) 8 processes the color signals coming from the preprocessing circuit 7, acquires from the process diverse kinds of information necessary for optical system control, and forwards the acquired information to the CPU 5. The digital signal processor 8 also outputs the pictures taken which are to be displayed for monitoring and written to the recording medium. Specifically, a detection circuit 9 in the digital signal processor 8 obtains the diverse kinds of information necessary for optical system control and the like from the color signals output by the preprocessing circuit 7. In more concrete terms, the detection signal 9 detects the levels of each of the color signals as the information needed for auto white balance and auto iris adjustment. These items of information are sent to the CPU 5 through a central processing unit 10 and an interface (I/F) 11 inside the digital signal processor 8. The color signals are further subjected to a frequency band filtering process whereby appropriate signal levels are detected as information necessary for auto focus adjustment. This information is also supplied to the CPU 5. Based on such information, the digital still camera 1 causes the CPU 5 to control the driving circuit 3 which in turn drives the focus lens for auto focus adjustment. The aperture setting is controlled likewise, with the cumulative charging time on the CCD imaging device 4 varied by the CCD driving circuit 6 for auto iris adjustment. The CPU 5 further varies the gains used by the preprocessing circuit 7 for auto white balance adjustment.

A gamma correction circuit (γ) 12 performs gamma correction on the color signals output by the preprocessing circuit 7. An interpolation circuit 13 interpolates individually the color signals coming from the gamma correction circuit 12. Color filters in the CCD imaging device 4 are used to set sampling timings for the color signals in a successively cyclical manner. The color signals are then timed to match during sampling with their sampling points boosted.

A YUV conversion circuit 15 converts the color signals coming from the interpolation circuit 13 into picture data constituted by brightness and color difference signals. A resolution conversion circuit 16 under control of the CPU 10 reduces the horizontal-direction resolution in the picture data obtained from the YUV conversion circuit 15. The digital signal processor 8 outputs the resulting picture data onto a BUS through the interface 11. In this manner, the digital still camera 1 causes the CCD imaging device 4 to thin out the data in the vertical direction and the resolution conversion circuit 16 to reduce the number of pixels in the horizontal direction, thereby generating picture data at a resolution fit for display on a liquid crystal display (LCD) 18. It is also possible to convert the resolution in the horizontal and vertical directions to reflect the user-established resolution settings, thus generating the picture data to be recorded as moving pictures. Given still picture data from the CCD imaging device 4, the resolution conversion circuit 16 reduces the resolution of the data not only in the horizontal direction but also in the vertical direction before outputting the data. The digital still camera 1 thus converts the high-resolution picture data coming from the CCD imaging device 4 into the user-designated resolution as well as into the resolution suitable for display on the LCD 18, and generates picture data for use as thumbnail images.

Where still or moving pictures recorded in a memory card 17 or the like are to be displayed, the resolution conversion circuit 16 converts the retrieved picture data similarly into the resolution fit for display on the LCD 18.

Also in the digital signal processor 8, a compressing expanding circuit 19 under control of the CPU 10 compresses the picture data coming from the YUV conversion circuit 15 or from the resolution conversion circuit 16, and outputs the compressed data. During the process, the compressing expanding circuit 19 uses the JPEG (Joint Photographic Coding Experts Group) standard in compressing still pictures or the MPEG (Moving Picture Experts Group) standard in compressing moving pictures for output. The compressed picture data is output onto the BUS in the digital signal processor 8. Where still or moving pictures recorded in the memory card 17 or the like are to be monitored, the compressing expanding circuit 19 expands the retrieved picture data for output. A memory control circuit 20 controls the operation of a memory 21. During data compression or expansion by the compressing expanding circuit 19, the memory control circuit 20 causes the memory 21 to store the picture data temporarily.

Under control of the host CPU 5, the CPU 10 controls the overall operation of the digital signal processor 8. The interface 11 permits exchanges of control data as well as picture data between the digital signal processor 8 and the BUS.

In its normal operation, the digital signal processor 8 under control of the CPU 10 successively processes the moving pictures which have been taken by the CCD imaging device 4 and thinned out in the vertical direction in order to generate picture data composed of brightness and color difference signals. Thereafter, the resolution conversion circuit 16 reduces the resolution of the picture data in the horizontal direction for display onto the LCD 18. Given an instruction from the CPU 5 to record moving pictures, the resolution conversion circuit 16 converts the picture data to the user-designated resolution. The compressing expanding circuit 19 then compresses the picture data so that the compressed data may be output and recorded illustratively to the memory card 17.

Suppose that with moving pictures displayed on the LCD 18, an instruction to record a still picture is given by the user pressing the shutter release. In that case, with the thinning-out process in the vertical direction halted, still pictures taken by the CCD imaging device 4 are processed successively to generate picture data made up of brightness and color difference signals. The generated data is placed temporarily in the memory 21. The resolution conversion circuit 16 reduces the resolution of the picture data in the horizontal and vertical directions and outputs the resulting data for display onto the LCD 18. In like manner, the picture data held in the memory 21 is retrieved and converted into picture data with a user-selected resolution. In keeping with an operation mode set by the user, the compressing expanding circuit 19 either compresses the picture data or leaves the data uncompressed and outputs the resulting data for recording. The resolution conversion circuit 16 further generates thumbnail images from the picture data and outputs the generated data for recording.

Where still pictures held in the memory card 17 or the like are to be monitored, the picture data retrieved from the memory is input through the BUS to the memory 21 for temporary storage. The data is expanded as needed by the compressing expanding circuit 19, before the resolution of the data is reduced by the resolution conversion circuit 16 for output to the monitor for display. Likewise, where moving pictures retained in the memory card 17 or the like are to be monitored, the picture data retrieved from the memory is input successively through the BUS for expansion by the compressing expanding circuit 19. The expanded data is output to the monitor for display.

In monitoring still pictures recorded on the recording medium, the digital still camera 1 is capable of so-called reproduced zoom display (in which part of a picture is cut out and magnified for display) or index picture display (where thumbnail images are displayed). These processes are handled by the memory control circuit 20 performing address control and by the resolution conversion circuit 16 executing resolution conversions.

In the digital still camera 1, the CCD imaging device 4, CCD driving circuit 6, resolution conversion circuit 16, and compressing expanding circuit 19 constitute a data size setting means for setting the data size for pictures taken. In the data size setting means, the CCD imaging device 4, CCD driving circuit 6, and resolution conversion circuit 16 make up a resolution setting means for setting the resolution for pictures taken. The compressing expanding circuit 19 constitutes a data compressing means for compressing the pictures taken as data. Data compression rates are changed by the data compressing means when the data size is set for pictures taken. In addition to the above structures for processing the pictures taken, the digital signal processor 8 includes a structure for compressing audio signals picked up by a microphone 35 and a structure for expanding compressed audio signals. These arrangements allow audio signals to be recorded in conjunction with, say, moving pictures being taken.

In the digital still camera 1, a controller 23 under control of the CPU 5 drives the LCD 18 using the picture data output onto the BUS for display purposes, whereby pictures taken are displayed on the LCD 18. An interface (I/F) 24 interfaces the digital still camera 1 with recording media. This embodiment uses the memory card 17 and an optical disk 27 as its recording media. The interface 24 under control of the CPU 5 writes to the memory 17 or optical disk 27 the picture data output onto the BUS for recording purposes. The interface 24 further reads the data from the memory card 17 or optical disk 27 and outputs the retrieved data onto the BUS.

An interface (I/F) 28 is designed to handle wireless LAN (Local Area Network) setups under IEEE (The Institute of Electrical and Electronics Engineers, Inc.) 802 standards and the like. Through the interface 28, the digital still camera 1 may upload and download pictures taken to and from a network server. The interface 28 further allows the digital still camera 1 to use the network server as a recording medium replacing the recording media 17 and 27. An interface (I/F) 29 deals with wired data communications in USB (Universal Serial Bus) setups and the like. Through the interface 29, the digital still camera 1 may connect illustratively to a personal computer to upload and download pictures taken thereto and therefrom. The interface 29 allows the digital still camera 1 to use the personal computer as a recording medium replacing the recording media 17 and 27.

The CPU 5 executes a processing program that is loaded from a read-only memory (ROM) 31 into a work area allocated in a random access memory (RAM) 30. Through the program execution, the CPU 5 controls the digital still camera 1 as a whole in response to the user's operations on the controls of an operation panel 32. The processing program is offered preinstalled in the read-only memory 31, downloaded through the interface 28 or 29, or carried on recording media such as the memory 17 or optical disk 27. Other recording media that may be utilized for program distribution include magnetic disks and magnetic tapes.

After the user applies power to start up the camera, the CPU 5 places the entire camera operation into still picture taking mode, moving picture taking mode, still picture monitor mode, or moving picture monitor mode in accordance with the control settings. The still picture taking mode is an operation mode in which still pictures are recorded to the user-designated recording medium in response to the pressing by the user of the shutter release.

In the still picture taking mode, the CPU 5 first places the entire camera operation into monitoring mode. Through auto focus adjustment, auto iris adjustment and auto white balance adjustment, the CPU 5 acquires from the CCD imaging device 4 the picture data thinned out in the vertical direction, causes the digital signal processor 8 to perform diverse processes on the thinned-out data while reducing its resolution, and outputs the resulting picture data to the controller 23 for display on the LCD 18. The LCD 18 on the digital still camera 1 thus allows the user to verify a good opportunity to take pictures.

If the shutter release is pressed on the operation panel 32 in the above state, the CPU 5 switches the entire camera operation from monitoring mode to capture operation. More specifically, the CPU 5 switches the operation of the CCD driving circuit 6 to acquire high-resolution still pictures taken from the CCD imaging device 4 (i.e., picture data not thinned-out in the vertical direction), and causes the driving circuit 3 to close the mechanical shutter of the optical system 2. The CPU 5 instructs the digital signal processor 8 to process the still picture data thus acquired and place the processed picture data with the user-predetermined resolution into the memory 21 for temporary storage. The resolution of the picture data recorded in the memory 21 is reduced when the retrieved data is output onto the BUS for display on the LCD 18. The picture data retrieved from the memory 21 is compressed by the compressing expanding circuit 19 before being reduced in resolution by the resolution conversion circuit 16 to generate thumbnail image data. The compressed picture data and thumbnail image data thus prepared are written to the user-predetermined memory card 17 or optical disk 27 by way of the random access memory 30, or are output to the outside via the interface 28 or 29. When the compressed picture data and thumbnail image data are temporarily stored in the random access memory 30, the CPU 5 establishes control codes and the like necessary for processing the picture data. If the user selects the uncompressed treatment of picture data, the CPU 5 causes the digital signal processor 8 to skip the processing of the compressing expanding circuit 19.

With the still picture data thus processed by the relevant circuit blocks in the camera, the CPU 5 successively returns the operation mode of each circuit block that has completed its share of processing into monitoring mode. At the same time, the CPU 5 causes the mechanical shutter to be opened in preparation for the next picture to be taken.

The moving picture taking mode is an operation mode in which the recording of moving pictures to the user-designated recording medium is started and stopped in keeping with the pressing by the user of the shutter release.

In moving picture taking mode, as in still picture taking mode, the CPU 5 first places the entire camera operation into monitoring mode. Through auto focus adjustment, auto iris adjustment and auto white balance adjustment, the CPU 5 acquires moving picture data from the CCD imaging device 4, causes the digital signal processor 8 to process the acquired data, and outputs the resulting picture data to the LCD 18 for display.

If the user presses the shutter release on the operation panel 32 in the above state, the CPU 5 causes the digital signal processor 8 to record moving picture data successively to the memory 21 with the resolution predetermined by the user. The picture data in the memory 21 is compressed by the compressing expanding circuit 19. The compressed picture data is written to the user-predetermined memory card 17 or optical card 27 by way of the random access memory 30, or output to the outside through the interface 28 or 29. The sound data accompanying the picture data is processed likewise before being written to the optical disk 27 or output to the outside through the interface 28 or 29. When the compressed picture data is held temporarily in the random access memory 30, the CPU 5 also sets control codes and the like that are needed to process the picture data.

The recording of moving pictures taken is started as described above under control of the CPU 5. When the user again presses the shutter release, the CPU 5 halts the recording and output of the picture data and switches the entire camera operation mode into monitoring mode.

The still picture monitor mode is a mode in which still pictures written to recording media are displayed. In this operation mode, the CPU 5 causes the LCD 18 to display a menu screen that accepts the input of the recording medium from which to retrieve still pictures for display. With the recording medium entered and accepted, the CPU 5 detects still picture files from the memory card 17 or optical disk 27 or from a connected entity through the interface 28 or 29. The names of the detected still picture files are displayed on the LCD 18. When the user gives an instruction to view index pictures in menu form, the CPU 5 causes the picture data representative of thumbnail images to be loaded successively into the random access memory 30 through the interface 24, 28 or 29. The loaded picture data is transferred to the digital signal processor 8 so as to be expanded successively by the compressing expanding circuit 19. Thereafter, the thumbnail images are corrected by the resolution conversion circuit 16 to a resolution fit for a successive menu-form display on the LCD 18.

The CPU 5 accepts the selection of a desired still picture file from the menu-form display, and loads the picture data from the user-selected file into the random access memory 30 through the interface 24, 28 or 29. The picture data thus loaded is transferred to the digital signal processor 8. The transferred data is expanded by the compressing expanding circuit 19 and corrected in terms of resolution by the resolution conversion circuit 16, before being displayed on the LCD 18. If the user gives an instruction to zoom in on what is being displayed, the picture data held in the memory 21 is partially cut out for transfer to the resolution conversion circuit 16. The carved-out picture data is corrected in resolution by the resolution conversion circuit 16 for magnified display on the LCD 18.

The moving picture monitor mode is an operation mode in which moving pictures stored on recording media are displayed. In this operation mode, as in still picture monitor mode, the CPU 5 accepts the selection of the recording medium from which to retrieve and display moving pictures. With the recording medium selected and accepted, the names of moving picture files are detected from the recording medium in question and displayed on the LCD 18 in menu form.

The CPU 5 accepts the selection of a moving picture file from the menu display. The picture data and sound data from the user-selected moving picture file are loaded successively into the random access memory 30 through the interface 24, 28 or 29. The picture data and sound data thus loaded are transferred to the digital signal processor 8. The transferred picture data is expanded by the compressing expanding circuit 19 and corrected in resolution by the resolution conversion circuit 16 before being displayed on the LCD 18. The sound data after the transfer is expanded and output through speakers. During the display of moving pictures, the user may give an instruction to effect stop, pause, fast-forward, fast-rewind, slow-motion replay or frame-by-frame advance of what is being displayed. In such a case, the CPU 5 causes the digital signal processor 8 to switch its processes as instructed, thereby changing arrangements of the data transfer from the recording medium in use. The frames constituting moving pictures are then displayed on the LCD 18 in the user-instructed sequence and are processed for special effects as instructed.

When writing and reading the moving or still picture data to and from the memory card 17 or optical disk 27 as described above, the CPU 5 checks management data recorded on these media to display their recordable areas on the screen. The digital still camera 1 manages its recording media based on the display of such management data in reference to the first and the second managing criteria established by the user. The first managing criterion is a reference recording size for use in recording pictures taken to the recording medium. The second managing criterion is another reference recording size formed by an integral multiple of the reference recording size under the first managing criterion.

Where pictures taken are still pictures, the first managing criterion is set to represent the number of still pictures to be recorded, and the second managing criterion is set to denote a multiple of the number of the still pictures to be recorded under the first managing criterion. Where pictures taken are moving pictures, the first managing criterion is established to represent a recording time for recording the moving pictures, and the second managing criterion is established to denote a multiple of the recording time under the first managing criterion.

Given the first and the second managing criteria, the digital still camera 1 may illustratively use up two out of five blocks allocated for still pictures under the second managing criterion. In one of the remaining three blocks, the camera may record, say, 12 pictures in view of the 24-picture threshold according to the first managing criterion. The recorded and the remaining areas for still pictures are thus distinctly grasped in a manner similar to that of conventional film cameras managing rolls of film. That is, the user of the film camera would understand clearly how much is exhausted and how much remains of the available resources when using up illustratively two out of five rolls of film and getting 12 exposures on one of the three remaining rolls of film.

In recording moving pictures, the digital still camera 1 may illustratively use up two out of five blocks in accordance with the second managing criterion. In one of the remaining three blocks, the camera may record, say, 60 minutes of moving pictures in view of the 120-minute threshold according to the first managing criterion. The recorded and the remaining areas for moving pictures are thus distinctly grasped in a manner similar to that of conventional video tape recorders managing tape cassettes. That is, the user of the conventional video tape recorder would understand clearly how much is exhausted and how much remains of the available resources when using up illustratively two out of five tape cassettes and having 60 minutes of moving pictures recorded on one of the three remaining tape cassettes.

When the first and the second managing criteria are to be established for still pictures, the digital still camera 1 displays a plurality of picture counts to choose from. The picture count eventually selected is accepted as the setting of the first managing criterion. With this embodiment, the picture count is set as a typical number of pictures that would be taken on a single roll of film by a film camera. This feature enhances the ease of operation for users familiar with the handling of conventional film cameras. Where the criteria are to be established for moving pictures, the digital still camera 1 displays a plurality of recording times to choose from. The recording time eventually selected is accepted as the setting of the first managing criterion. With this embodiment, the recording time is set as a typical recording time for a video tape recorder taking moving pictures on a single tape cassette. This feature boosts the ease of operation for users familiar with the handling of conventional video tape recorders.

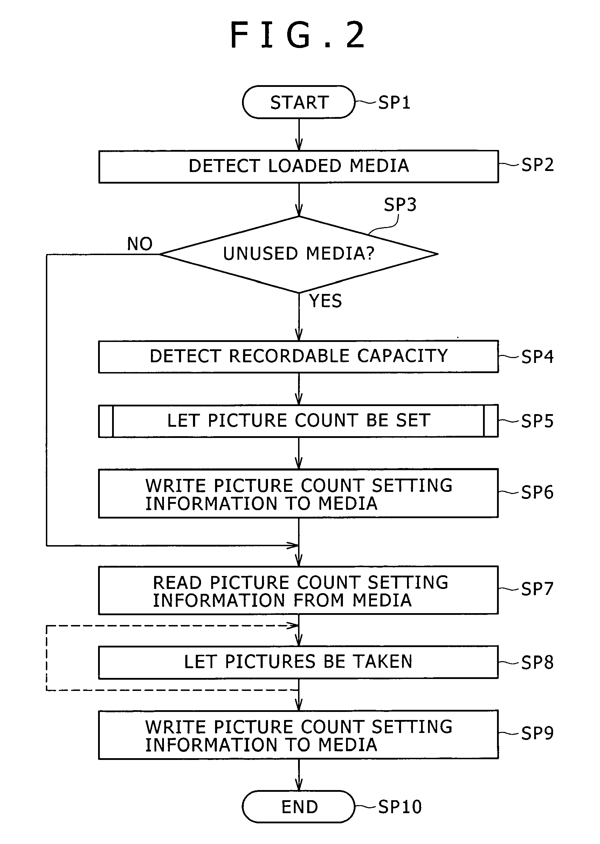

The user of the digital still camera 1 may vary the settings and the like of the data size per still picture and of the data transfer rate for moving pictures as preconditions for the first and the second managing criteria. When an unused recording medium is loaded into the digital still camera 1, this embodiment may thus need to carry out illustratively the steps in FIG. 2 to accept the user-selected settings of the first and the second managing criteria. The settings of the first and the second managing criteria are recorded as management data to the loaded recording medium together with other related data.

With the user-set still picture taking mode in effect, the CPU 5 may be informed by the interface 24 that the memory card 17 or optical disk 27 has been loaded. In that case, the CPU 5 carries out the steps shown in FIG. 2 starting from step SP1. Coming to step SP2 from step SP1, the CPU 5 is given the information about the newly loaded medium from the interface 24. In step SP3, the CPU 5 determines whether or not the loaded medium is an unused medium with no management data recorded thereon. If access to the recording medium illustratively through the interface 24 reveals that the loaded medium is an unused medium, the CPU 5 goes from step SP3 to step SP4. In step SP4, the CPU 5 detects a recordable area capacity from the recording medium. In step SP5, the CPU 5 allows the user to set the number of still pictures to be taken, as will be discussed later in more detail. The first and the second managing criteria are detected in this manner. In step SP6, the management data based on the managing criteria is written to the recording medium, before step SP7 is reached. If management data is found to exist already on the recording medium, the CPU 5 goes from step SP3 directly to step SP7.

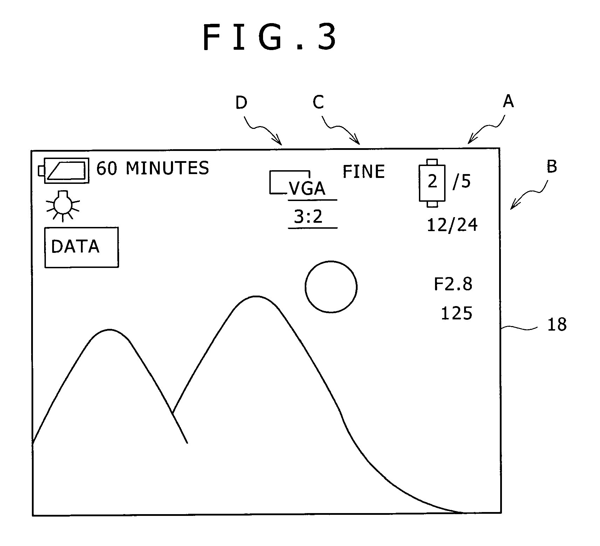

In step SP7, the CPU 5 reads the management data from the recording medium thereby detecting the first and the second managing criteria established by the user. In step SP8, the CPU 5 displays the remaining area of the recording medium as shown in FIG. 3 in keeping with the managing criteria, thus preparing to accept still pictures to be taken.

In FIG. 3, reference character A denotes a symbolized film roll case indicating that three out of five user-allocated blocks have been used up and that one of the remaining two blocks is being used. Reference character B points to a notation indicating that the second block is set to accommodate 24 pictures, twelve of which are yet to be taken. In FIG. 3, under the notation denoted by reference character B appear an aperture setting (F2.8) and a shutter speed (125). Shown near the middle of the display is a data compression mode (FINE, pointed to by reference character C) along with indications of still picture taking mode, a pixel count, and an angle of view (denoted by reference character D). In the leftmost part of the screen appear the remaining battery capacity, a white balance indication, and a notation indicating that the function of adding dates to the pictures taken is in effect.

As described, the digital still camera 1 displays on the screen the first and the second managing criteria as indicated by reference characters B and A, and picture-taking status in reference to these criteria. As indicated by reference characters C and D, the setting of data size is divided into data compression mode and resolution settings on display as preconditions for the first and the second managing criteria. The data size, thus formed by data compressing mode and resolution, is established by means composed of the CCD imaging device 4, CCD driving circuit 6, resolution conversion circuit 16, and compressing and expanding circuit 19.

In step SP8, the CPU 5 updates the indications being displayed. More specifically, every time a still picture is taken, the remaining picture count denoted by reference character B is decremented by 1. When the remaining picture count reaches zero, a message appears saying that blocks (i.e., of higher-order managing resources) will be switched. After the user's confirmation, the remaining block count denoted by reference character A is decremented by 1, followed by the resetting to 24/24 of the picture count represented by reference character B. In this state, the remaining picture count on the screen is decremented by 1 every time the shutter release is pressed by the user.

Thereafter, in response to the user's operations, still pictures are taken and recorded while the display is updated correspondingly. When the user removes power from the camera, step SP9 is reached. In step SP9, the management data written on the recording medium is updated. In step SP10, the entire process is terminated. If still pictures are to be transmitted illustratively to a network server and the like for storage through the interface 28 or 29, the CPU 5 proceeds to detect an available area in the still picture recordable space of the server and to detect relevant management data about the space.

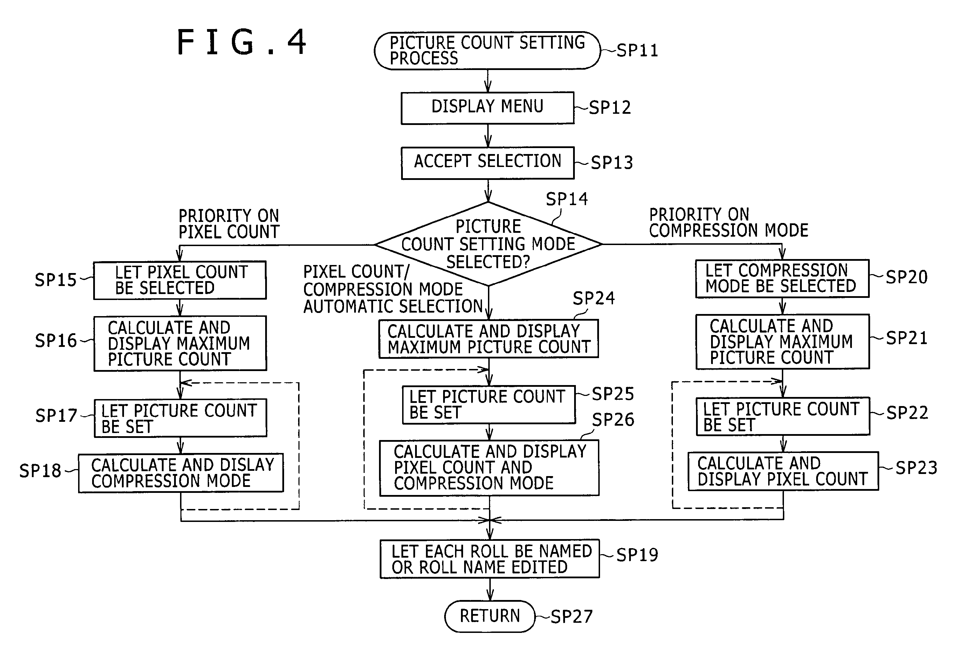

FIG. 4 is a flowchart of more detailed steps constituting the picture count setting process of step SP5 in FIG. 2. Starting the process in steps SP11, the CPU 5 displays a predetermined menu screen in step SP12. The digital still camera 1 has three modes: pixel count priority mode in which the first and the second managing criteria are established with priority on pixel count (resolution); compression rate priority mode in which the two managing criteria are established with priority on the minimizing of picture quality degradation through data compression; and automatic setting mode in which top priority is placed on the user-designated settings of the first and the second managing criteria. The CPU 5 displays a menu of the three modes to choose from in step SP12, and accepts the eventually selected mode in step SP13. In step SP14, the CPU 5 determines which mode has been selected by the user.

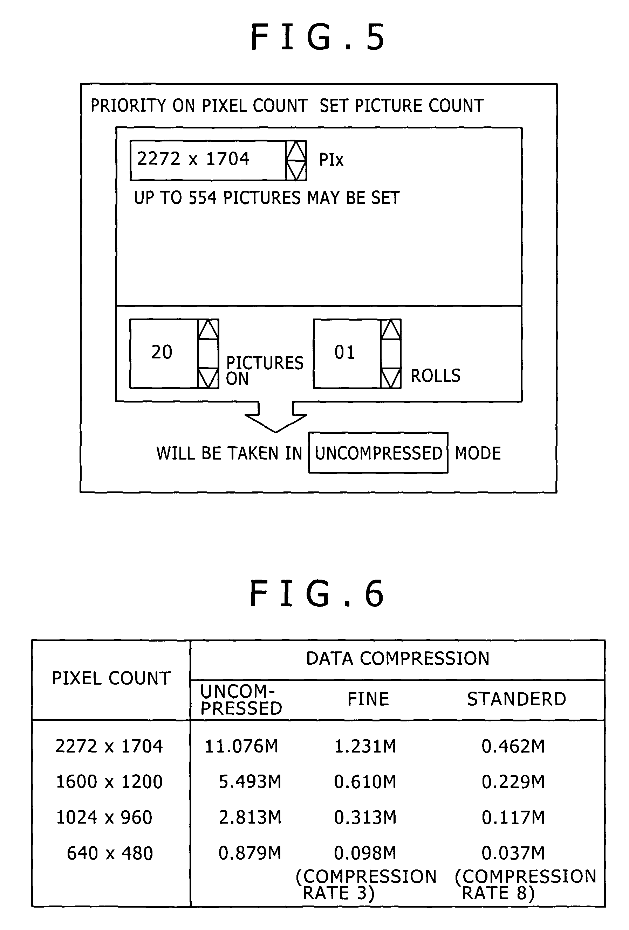

If the user is found to have selected pixel count priority mode, the CPU 5 goes from step SP14 to step SP15. In step S15, the CPU 5 displays an input screen, shown in FIG. 5, to accept the selection of a pixel count. At this point, as shown in FIG. 6, the digital still camera 1 permits selection of one of four still picture resolutions by means of the settings of the CCD imaging device 4, CCD driving circuit 6, and resolution conversion circuit 16 mentioned above. In the topmost part of the input screen, the CPU 5 displays a menu title (priority on pixel count: set picture count) indicating that settings will now be accepted in pixel count priority mode. When the user selects one of the pull-down menu items from a combo box, the CPU 5 accepts the user's selection out of the four resolutions.

After accepting the setting of the resolution from the user, the CPU 5 goes to step SP16. In step SP16, the CPU 5 calculates a maximum number of still pictures that may be recorded, by dividing the data size of the recordable area detected in step SP4 by the data size per still picture according to the selected resolution. The calculated maximum recordable number of still pictures is then displayed. With this embodiment, the calculation of the picture count is based on the smallest data size associated with the standard data compression rate (see FIG. 6). This arrangement thus helps record the taken pictures efficiently.

After calculating the maximum recordable number of still pictures in the manner described above, the CPU 5 displays on the input screen the maximum recordable still picture count together with a message such as the one shown in FIG. 5, "Up to 554 pictures may be set."

The CPU 5 then goes to step SP17 and accepts the selection of the number of still pictures to be taken, as the basis for setting the first and the second managing criteria. In the bottom part of the input screen appears a combo box indication. In the left-hand side combo box, the CPU 5 accepts the setting of the first managing criterion. With this embodiment, the combo box displays candidate picture counts from which to choose the first managing criterion in view of the available capacity of the storage medium.

More specifically, the CPU 5 causes the combo box to display numbers of pictures that could be taken on a single roll of film by a film camera. Since each roll of film is one of the 20-, 24-, or 36-exposure varieties, the CPU 5 allows the user to operate the up and down buttons attached to the combo box to display the count of 20, 24 or 36 in pull-down menu form. The picture count eventually selected by the user is accepted as the setting of the first managing criterion.

After accepting the setting of the first managing criterion as described, the CPU 5 proceeds to accept the setting of the second managing criterion in the right-hand side combo box. The CPU 5 calculates a maximum available value of the second managing criterion by dividing the maximum number of pictures that can be taken, by the value of the first managing criterion. Within a range of the maximum picture count thus calculated, the CPU 5 allows the user to operate the up and down buttons attached to the combo box to display multiples of the recordable picture count according to the first managing criterion. The picture count multiple selected by the user is then accepted as the setting of the second managing criterion.

Suppose that the first managing criterion is set to 20 and the second managing criterion to 1. That means the user has allocated on the recording medium a recording area equivalent to 20 still pictures on a single roll of film.

As described, the digital still camera 1 detects the available capacity of the storage medium and accepts the settings of the first and the second managing criteria within the range of the detected capacity. After the setting of the first managing criterion is accepted, multiples of that setting are displayed as candidate values, one of which may be selected as the second managing criterion. The eventually-selected multiple is accepted as the setting of the second managing criterion.

After accepting the setting of the number of pictures to be taken, the CPU 5 goes to step SP18. In step SP18, with the first and the second managing criteria as well as the recordable area of the recording medium obtained as described, the CPU 5 modifies the data compression mode that was set temporarily in step SP16 with priority on the picture count. More specifically, the data size per still picture based on the user-selected pixel count is calculated for each of the data compression modes in accordance with the relations between pixel counts and data compression rates shown in FIG. 6. Comparisons are made between the total data size obtained by multiplying the individual data sizes and the first and the second managing criteria on the one hand, and the capacity of the remaining recordable area on the other hand. The comparisons make it possible to detect the data compression mode that permits recording with the highest picture quality. The CPU 5 displays the detected data compression mode in the bottom part of the input screen. In the example of FIG. 5, the uncompressed mode is shown selected.

After displaying the compression mode and after obtaining the user's confirmation, the CPU 5 goes from step SP18 to step SP19. If the user's confirmation is not obtained, the CPU 5 accepts the settings repeatedly in response to the user's operation as indicated by broken lines in FIG. 4.

In the manner described above, the digital still camera 1 displays possible candidates of the first and/or the second managing criterion in keeping with the data size of the pictures taken based on the pixel count in effect, and accepts the setting of the first and/or the second managing criterion.

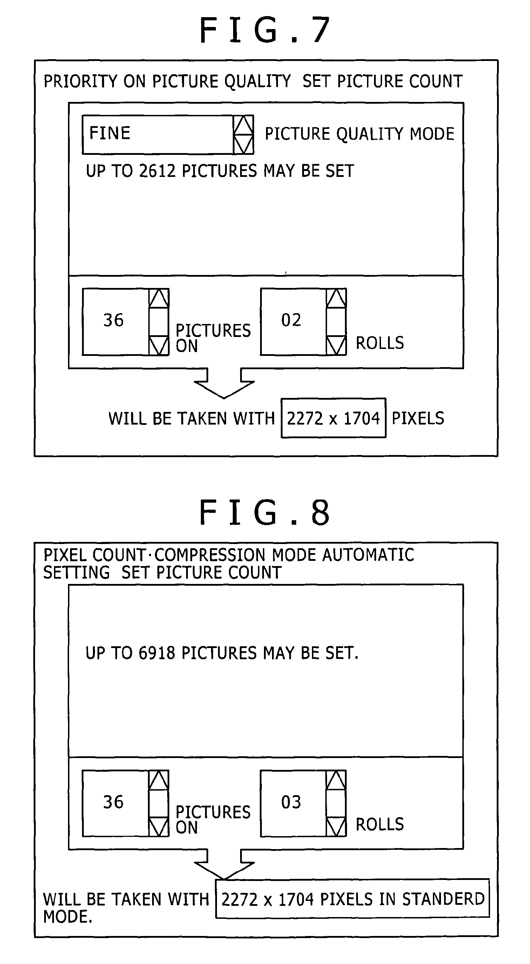

If the user is found to have selected compression rate priority mode, the CPU 5 goes from step SP14 to step SP20. In step SP20, the CPU 5 displays the input screen of FIG. 7 and accepts the selection of picture quality through that input screen. As described above with reference to FIG. 6, the digital still camera 1 can switch the degree of data compression for pictures taken to one of three modes: the mode of compression by the compressing expanding circuit 19, uncompressed mode, and the mode of a desired data compression rate. In the topmost part of the input screen, the CPU 5 displays a menu title (priority on picture quality: set picture count) indicating that settings will now be accepted in picture quality priority mode. When the user selects one of the pull-down menu items from a combo box, the CPU 5 accepts the user's selection out of the three data compression modes.

After accepting the setting of the user-selected resolution, the CPU 5 goes to step SP21. In step SP21, the CPU 5 calculates a maximum number of still pictures that may be recorded, by dividing the data size of the recordable area detected in step SP4 by the data size per still picture according to the user-selected data compression mode. The calculated maximum recordable number of still pictures is then displayed. With this embodiment, the calculation of the picture count is based on the smallest data size associated with the pixel count of pictures taken (see FIG. 6). This arrangement thus helps record the taken pictures efficiently.

After calculating the maximum recordable number of still pictures in the manner described above, the CPU 5 displays on the input screen the maximum recordable still picture count together with a message such as the one shown in FIG. 7, "Up to 2,612 pictures may be set."

The CPU 5 then goes to step SP22 and accepts the selection of the number of still pictures to be taken, as the basis for setting the first and the second managing criteria. In the bottom part of the input screen appears a combo box indication through which the CPU 5 accepts the input of the number of still pictures that may be taken and recorded on each putative roll of film and the number of the rolls that may be consumed. The CPU 5 accepts the settings of the first and the second managing criteria in the same manner as in pixel count priority mode. With the setting of the picture count accepted, the CPU 5 goes to step SP23. In step SP23, with the first and the second managing criteria as well as the recordable area of the recording medium established as described, the CPU 5 modifies the pixel count that was set temporarily in step SP21 with priority on the picture count. More specifically, the data size per still picture based on the user-selected data compression mode is calculated for each of the still picture pixel counts in accordance with the relations between pixel counts and data compression modes shown in FIG. 6. The pixel count that permits recording with the highest picture quality is then detected. The CPU 5 displays the detected pixel count in the bottom part of the input screen. In the example of FIG. 7, the pixel count of 2,272 x 1,704 is shown selected.

After displaying the pixel count and after obtaining the user's confirmation, the CPU 5 goes from step SP23 to step SP19. If the user's confirmation is not obtained, the CPU 5 accepts the settings repeatedly in response to the user's operation as indicated by broken lines in FIG. 4.

As described, the digital still camera 1 also displays possible candidates of the first and/or the second managing criterion in keeping with the data size of the pictures taken based on the data compression mode in effect, and accepts the setting of the first and/or the second managing criterion.

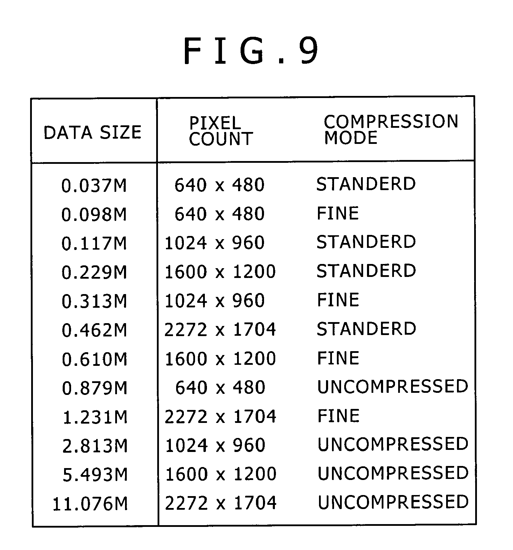

If the user is found to have selected automatic setting mode, the CPU 5 goes from step SP14 to step SP24. In step SP24, the CPU 5 detects the maximum number of still pictures that may be recorded on the recording medium, and displays the input screen of FIG. 8. FIG. 9 shows the relations between data compression modes and pixel counts shown in FIG. 6 as they are rearranged in ascending order of data sizes. Given the relations thus rearranged, the CPU 5 selects the pixel count and data compression mode involving the smallest data size, and calculates the maximum recordable number of still pictures by dividing the available capacity of the recording medium by that smallest data size.

The CPU 5 displays the mode currently in effect in the topmost part of the input screen. The calculated picture count is displayed below the mode indication. In step SP25, the CPU 5 accepts the settings of the first and the second managing criteria in the same manner as in the other modes discussed above. After accepting the setting of the picture count, the CPU 5 goes to step SP26. In step S26, with the first and the second managing criteria as well as the recordable area of the recording medium established as described, the CPU 5 modifies the data compression mode that was set temporarily in step SP24 with priority on the data size. More specifically, the remaining capacity of the recording medium is divided by the picture count that was calculated by multiplying the user-selected picture count by the user-designated number of rolls. The calculations provide the data size that can be allocated per still picture. The pixel count and data compression mode satisfying the calculated data size are detected from the relations in FIG. 9. The CPU 5 displays the pixel count and data compression mode thus detected in the bottom part of the input screen.

After accepting the settings of the first and the second managing criteria as described above, the CPU 5 goes from step SP26 to step SP19.

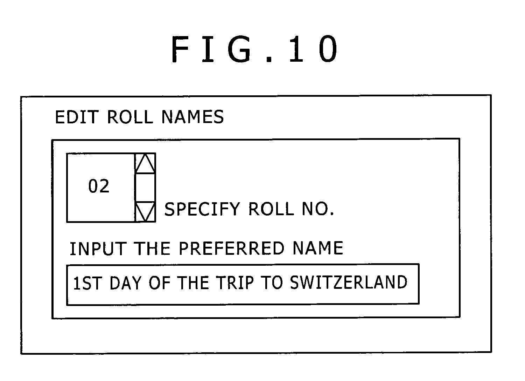

In step SP19, the CPU 5 accepts the input of a roll name representative of each of the blocks allocated under the second managing criteria. As shown in FIG. 10, the CPU 5 displays an input screen that accepts the input of roll names successively for each of the blocks. After accepting the input of the roll names through this input screen, the CPU 5 returns from SP27 to the original process. This embodiment lets the user leave the name input field blank omitting the name input.

As described, the CPU 5 controls the entire camera operation in such a manner that still pictures are taken consecutively with the pixel count and data compression mode in effect following their acquisition from the managing criteria. Furthermore, as discussed above in connection with step SP8, picture-taking status is displayed for recording medium management purposes. When the recording medium with its management data recorded thereon is moved to another digital still camera, the user can keep taking pictures in like manner using the same data. The recorded management data may also be used for editing work by computer.

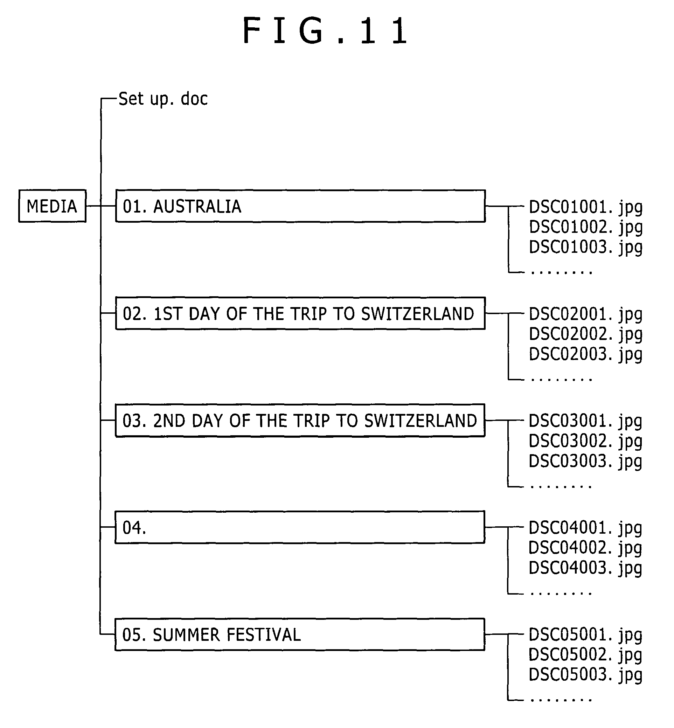

When recording taken pictures to the recording medium in keeping with the first and the second managing criteria, the CPU 5 establishes folders (FIG. 11) in which to record still picture files in accordance with the setting of the second managing criterion. Each of the folders is arranged to accommodate one of the roll names set and accepted in step SP19, each roll name being prefixed with a numeral indicating the ordinal position in sequence of each block under the second managing criterion. Illustratively, the folder No. 4 in FIG. 11 is shown having no roll name established earlier in step SP 19. Each file name is determined in accordance with the standard stipulated for this type of digital still camera.

The user may give an instruction to switch rolls any time through menu screen manipulations. In such a case, the current roll, even if its picture count has not been exhausted yet, is replaced by a new roll to record taken pictures on.

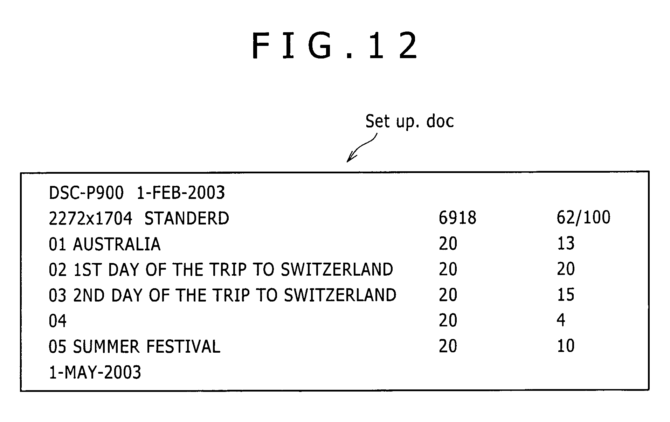

With this embodiment, the root directory constituting the layer on which the folders are located also has a management file "Setup.doc" recorded which accommodates management data. FIG. 12 shows typical content of the management data in such a management file. In this example, the management data includes an identification code (DSC-P900) assigned to identify the type of the digital still camera that initially had the management data written to the recording medium and the first date of recording. Also included in the data are the initially assigned settings such as a pixel count (e.g., 2,272 x 1,704), a data compression mode (STANDERD), a maximum recordable picture count (6,918) based on the selected data compression mode (STANDERD), and the currently-taken picture count versus a maximum recordable picture count per roll (62/100). Each roll is recorded in conjunction with its roll number, roll name, maximum recordable picture count, currently-taken picture count, and the last time the management data was updated (1-MAY-2003).

It might happen that the CPU 5, upon processing a recording medium moved from another digital still camera together with management data recorded as described, finds it impossible to reproduce the previously established pixel count and data compression mode with this digital still camera 1. In other words, it might turn out that the digital still camera 1 is incapable of handling the pixel count and other settings which were established earlier by the other digital still camera as part of the management data. In such a case, the CPU 5 controls the entire camera operation in such a manner as to acquire a still picture count that can be as close to the previous management data as possible while not exceeding the capacity of the recording medium. The acquisition of that picture count is effected by an alternative setting process, to be discussed later.

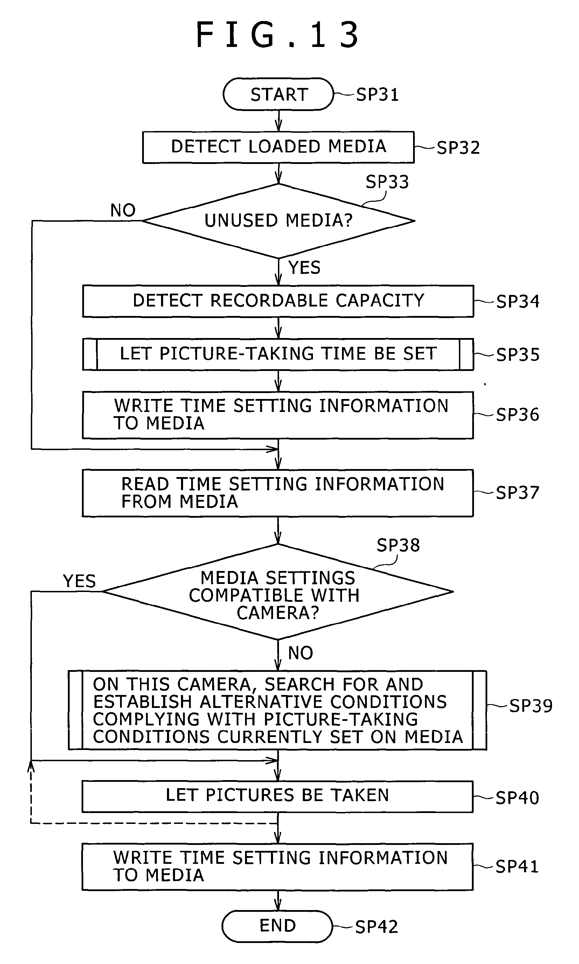

If the user is found to have selected moving picture taking mode and if the interface 24 gives notification that the memory card 17 or optical disk 27 has been loaded, then the steps in FIG. 13 are carried out. More specifically, starting in step SP31, the CPU 5 receives such notification from the interface 24 in step SP32. In step SP33, the CPU 5 determines whether the loaded recording medium is an unused medium with no management data recorded thereon. If the loaded medium is found to be an unused medium through access to the medium via the interface 24, the CPU 5 goes from step SP33 to SP34. In step SP34, the CPU 5 detects the capacity of the recordable area on the medium. If the recording medium is found carrying the management data about still pictures described above in connection with FIG. 2, then an available capacity derived from the management data is detected. In step SP35, the CPU 5 allows the user to perform a picture-taking time setting process, to be described later. Through this process, the first and the second managing criteria are detected. In step SP36, the management data under the first and the second managing criteria is written to the recording medium, before step SP37 is reached. If the management data is found already recorded on the recording medium in step SP33, then the CPU 5 goes directly to step SP37.

In step SP37, the CPU 5 reads the management data from the recording medium and detects therefrom the user-established first and second managing criteria. In step SP38, the CPU 5 determines whether or not the settings recorded in the management data can be reproduced. If the result of the check in step SP38 is negative, then step SP39 is reached. In step SP39, an alternative setting process is carried out to detect alternative conditions complying with the picture-taking conditions in the management data. A pixel count and a data compression mode under the alternative conditions are set anew for the components involved, before step SP40 is reached. This is the case in which, as in the case of still pictures, the digital still camera has found it impossible to reproduce the settings established by another digital still camera.

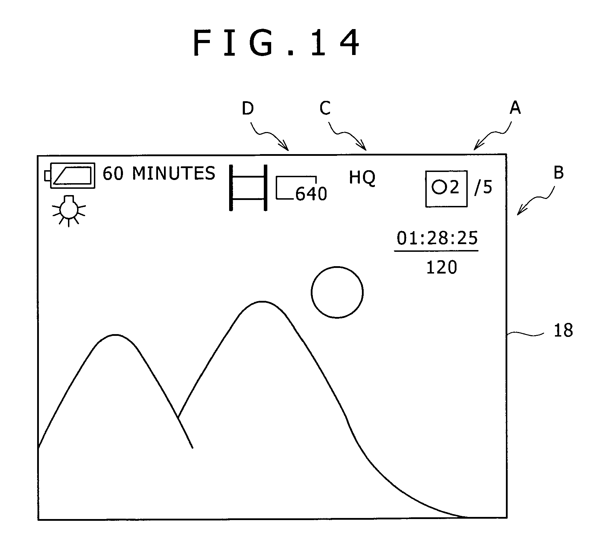

If the result of the check in step SP38 is affirmative, then the pixel count and data compression mode derived from the management data are established before step SP40 is reached. In step SP40, the CPU 5 accepts the taking of moving pictures while displaying the remaining recordable time of the recording medium in keeping with the first and the second managing criteria, as shown in FIG. 14.

The display in FIG. 14, using a symbolic marking evocative of a tape cassette casing as indicated by reference character A, shows that three out of the five blocks established by the user have been consumed, that one of the remaining two blocks is being used, that the currently-used block is set for a recording time of 120 minutes, and that the recording of moving pictures is still available for 1 hour, 28 minutes and 25 seconds that remain. Shown near the middle of the display in FIG. 14 is a data compression mode (HQ, pointed to by reference character C) along with indications of moving picture taking mode and a pixel count (denoted by reference character D). In the leftmost part of the screen appears the remaining battery capacity, with a white balance indication under it.

In moving picture taking mode, as described, the digital still camera 1 displays on the screen the first and the second managing criteria as indicated by reference characters B and A, and picture-taking status in reference to these criteria. As indicated by reference characters C and D, the setting of data size is divided into data compression mode and resolution settings on display as preconditions for the first and the second managing criteria. The data size, thus formed by data compressing mode and resolution, is established by means composed of the CCD imaging device 4, CCD driving circuit 6, resolution conversion circuit 16, and compressing and expanding circuit 19.

In keeping with the progress of step SP40, the CPU 5 updates these settings on display. More specifically, as moving picture are being taken, the remaining recordable time denoted by reference character B is decremented progressively. When the remaining time reaches zero, a message appears saying that blocks (i.e., of higher-order managing resources) will be switched. After the user's confirmation, in this case, the remaining block count denoted by reference character A is decremented by 1, followed by the resetting to 02:00:00/120 of the recordable time represented by reference character B. From this state, the remaining recordable time indication on the screen starts getting decremented in accordance with how much the moving picture taking process has progressed.

Thereafter, in response to the user's operations, moving pictures are taken and recorded while the display is updated correspondingly. When the user removes power from the camera, step SP41 is reached. In step SP41, the management data written on the recording medium is updated. In step SP42, the entire process is terminated. If moving pictures are to be transmitted illustratively to a network server and the like for storage through the interface 28 or 29, the CPU 5 proceeds to detect an available area in the moving picture recordable space of the server and to detect relevant management data about the space.

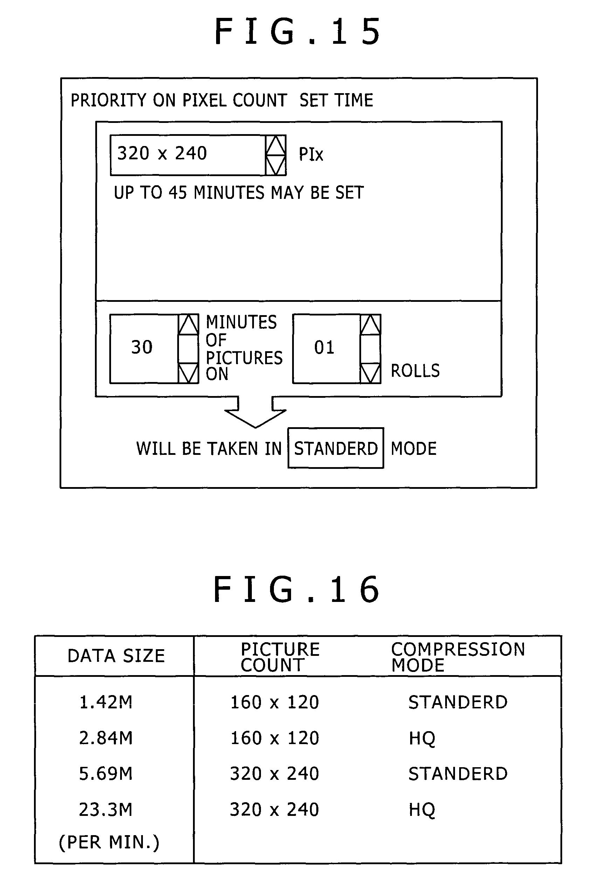

As shown in FIG. 16, the digital still camera 1 allows one of two moving picture resolution levels to be selected with the above-mentioned CCD imaging device 4, CCD driving circuit 6 and resolution conversion circuit 16 set appropriately. The digital still camera 1 also allows one of two data compression modes to be selected with the compressing and expanding circuit 19 set in a suitable manner. In the topmost part of the input screen, the CPU 5 displays a menu title (priority on pixel count set time) indicating that settings will now be accepted in pixel count priority mode. When the user selects one of the two resolution levels from a pull-down menu on a combo box display, the CPU 5 accepts the user's selection.

After accepting the resolution setting the user selected, the CPU 5 divides the data size of the recordable area detected in step SP34, by the moving picture transfer rate based on the selected resolution taking additionally the transfer rate for sound data into account, and displays the recordable time resulting from the division. With this embodiment, the calculation of the recordable time is based on the lowest transfer rate associated with the standard data compression rate (see FIG. 16). This arrangement enables to record the taken pictures efficiently.

After calculating the maximum recordable time in the manner described above, the CPU 5 displays on the input screen the maximum recordable time with a message such as the one shown in FIG. 15, "Up to 45 minutes may be set."

The CPU 5 proceeds to accept the setting of a picture-taking time under the first and the second managing criteria. On the input screen, the CPU 5 accepts the setting of the first managing criterion through a left-hand side combo box under the recordable time indication. That is, this embodiment displays above the combo box an available range of the first managing criterion based on the available capacity of the recording medium. The setting of the first managing criterion is then accepted in view of the available range displayed for reference.

In the left-hand side combo box, the CPU 5 displays typical picture-taking times on a tape cassette for use with a conventional video tape recorder. The tape cassette for the video tape recorder typically offers a 10-, 20-, 60-, 90-, 120-, or 180-minute recordable time. By allowing the user to operate the up and down buttons on the combo box, the CPU 5 displays successively the 10-, 20-, 60-, 90-, 120-, and 180-minute settings in a pull-down menu format. When the user selects one of the displayed settings, the CPU 5 accepts the selection as the user's setting of the first managing criterion.

After accepting the setting of the first managing criterion, the CPU 5 accepts the setting of the second managing criterion in another combo box on the right-hand side of the combo box in which the first managing criterion was set and accepted. The CPU 5 divides the maximum recordable time for taking moving pictures by the first managing criterion to obtain a maximum second managing criterion for reference. The CPU 5 then lets the user operate the up and down buttons of the right-hand side combo box. The user's button manipulations cause multiples of the recordable time under the first managing criterion to be displayed successively as candidates to choose from, the displayed multiples being within the range of the maximum second managing criterion acquired above. The CPU 5 then accepts the user's selection as the setting of the second managing criterion.

Suppose that the first and the second managing criteria are set for 30 and 1 respectively. This means the user has allocated on the recording medium a moving picture recordable area equivalent to a single 30-minute tape cassette.

That is, in taking moving pictures, the digital still camera 1 also detects an available capacity of the recording medium in order to accept the settings of the first and the second managing criteria within the range of the available capacity detected. With the setting of the first managing criterion accepted, the camera displays multiples of the first criterion from which to choose the second managing criterion. The selected multiple is accepted as the second managing criterion.

After accepting the setting of the picture-taking time and after setting the first and the second managing criteria along with the recordable area of the recording medium, the CPU 5 modifies accordingly the data compression mode that was set earlier temporarily with priority on the recording time. More specifically, the data size for taking moving pictures based on the user-selected pixel count is calculated for each of the data compression modes in accordance with the relations between the pixel counts and the data compression modes shown in FIG. 16. The data compression mode that permits recording with the highest picture quality is then detected. The CPU 5 displays the detected data compression mode in the bottom part of the input screen. In the example of FIG. 15, the standard data compression mode is selected.

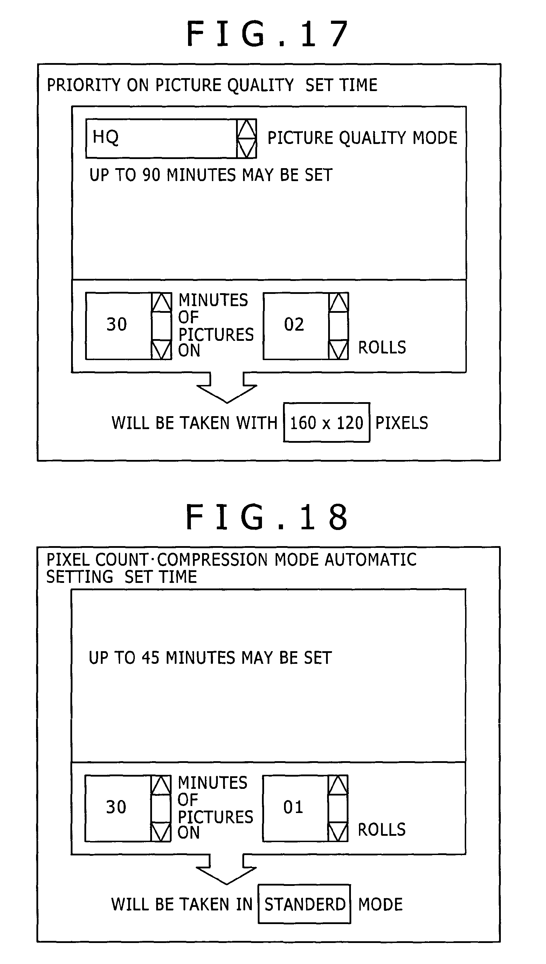

FIG. 17 shows an input screen in effect when the user has selected compression rate priority mode. In the topmost part of the input screen, the CPU 5 displays a menu title (priority on picture quality set time) indicating that settings will now be accepted in picture quality priority mode. When the user selects one of the pull-down menu items from a combo box, the CPU 5 accepts the user's selection as one of two data compression modes.

After accepting the setting of the user-selected data compression mode, the CPU 5 calculates a maximum moving picture recordable time by dividing the data size of the recordable area detected in step SP34 by the data size for taking moving pictures in the user-selected data compression mode, the latter size being supplemented by the data size for sound data. The calculated maximum moving picture recordable time is then displayed. With this embodiment, the calculation of the recordable time is based on the smallest data size associated with the pixel count for the moving pictures taken (see FIG. 16). This arrangement thus helps record the taken pictures efficiently.

After calculating the maximum recordable time in the manner described above, the CPU 5 displays on the input screen the maximum recordable time with a message such as the one shown in FIG. 17, "Up to 90 minutes may be set."

The CPU 5 proceeds to accept the settings of the first and the second managing criteria in the same manner as in pixel count priority mode. In compressing the data for moving pictures, the digital still camera 1 displays the first and/or the second managing criterion that can be set in keeping with the data size of the pictures taken. The settings of the first and/or the second managing criterion are then accepted.

If the user selects automatic setting mode, the CPU 5 displays the input screen of FIG. 18. After having the pixel count and data compressing mode selected in conjunction with the smallest data size, the CPU 5 calculates a recordable time accordingly. The calculated recordable time is then displayed so that the settings of a recording time and a roll count may be accepted according to the calculated time as described. This is how the settings of the first and the second managing criteria are accepted.

In dealing with moving pictures, as with still pictures, the CPU 5 first accepts the settings of the first and the second managing criteria and then accepts the input of folder names per block. With these settings in effect, files are created on the basis of the management data for moving pictures, and the created files are written to the recording medium.

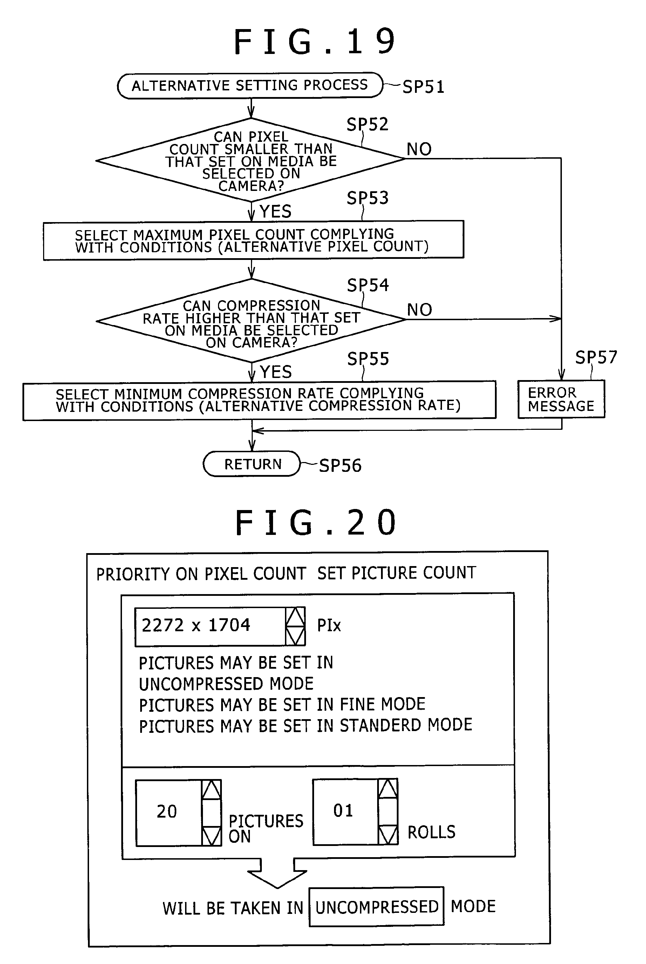

FIG. 19 is a flowchart of steps constituting an alternative setting process for dealing with sill pictures as well as moving pictures. With this process set in motion, the CPU 5 goes from step SP51 to step SP523 in which a check is made to determine whether a pixel count smaller than the count stipulated by the original management data can be set. If the check reveals that such a pixel count can be set, then proceeds to step SP53. In step SP53, the CPU 5 sets the maximum pixel count detected in step SP53 as the pixel count for this digital still camera 1. In step SP54, the CPU 5 checks to determine whether a data compression rate higher than the compression rate originally established on the recording medium can be set. If the check reveals that such a data compression rate can be set, then proceeds to step SP55. In step SP55, the CPU 5 establishes the data compression mode based on the maximum transfer rate detected in step SP55 as the data compression mode for this digital still camera 1. Step SP55 is followed by step SP56 where control is returned to the original process. As described, within a range not exceeding the capacity of the recording medium in use, this embodiment can record still pictures or moving pictures under conditions complying with the picture-taking settings originally established on the recording medium as the preconditions for the first and the second managing criteria.

If the result of the check in step SP52 or SP54 is negative, then the CPU 5 goes to step SP57 and displays an error message. Following the error message display, the CPU 5 returns to the original process. In such a case, the CPU 5 stops recording still or moving pictures to the recording medium effectively to avoid the situation where recording would become impossible due to an exhausted recording medium capacity. In the alternative setting process, it is conceivable to substitute a larger data size for the newly acquired data size smaller than that under the conditions found on the recording medium. That is, following a renewed check of the remaining available capacity of the recording medium, alternative conditions yielding a larger data size than that under the picture-taking conditions detected on the recording medium may be adopted, provided the total medium capacity is not exceeded. Under these alternative conditions, the first and the second managing criteria may be determined to ensure a continuous picture-taking process.

### (1-2) Operation of the first embodiment

When the digital still camera 1 of the above-described structure is used to acquire the still pictures taken, each picture taken with the whole pixels of the CCD imaging device 4 is processed by the preprocessing circuit 7. The pictures thus taken are converted to the user-selected resolution by the resolution conversion circuit 16. If data compression is not performed, the picture data output by the resolution conversion circuit 16 is recorded to the memory card 17 and optical disk 27 via the interface 24 or to a network server or the like via the interface 28 or 29. If data compression is carried out, the picture data output by the resolution conversion circuit 16 is compressed by the compressing expanding circuit 19 at the user-selected data compression rate. The picture data thus compressed is recorded to the memory card 17 and optical disk 27 via the interface 24 or to a network server or the like via the interface 28 or 29.

Where moving pictures are to be recorded, the pictures taken by the CCD imaging device 4 with its pixels thinned out in the vertical direction are processed by the preprocessing circuit 7. The moving pictures thus processed are converted to the user-selected resolution by the resolution conversion circuit 16. The picture data output by the resolution conversion circuit 16 is compressed by the compressing expanding circuit 19 at the user-designated data compression rate. The compressed picture data is recorded to the memory card 17 and optical disk 27 via the interface 24 or to a network server or the like via the interface 28 or 29. The sound data accompanying the picture data is compressed likewise before being written to the recording medium or transmitted to the outside.

In the processing above, the digital still camera 1 initially accepts the first managing criterion set as a reference recording size for use in recording the pictures taken to the recording medium, and the second managing criterion set as another reference recording size formed by an integral multiple of the reference recording size under the first managing criterion. The settings of the first and the second managing criteria allow the digital still camera 1 to manage the recording medium in substantially the same manner as film cameras or video tape recorders. That is, the recording medium is managed just as effectively as the consumed volume of film or tape cassettes managed by the corresponding recording devices in terms of the number of still pictures taken per film roll or the remaining moving picture recordable time per tape cassette, the film rolls and tape cassettes being changed as needed. This feature, when applied to the recording of still and moving pictures, makes it possible to manage recording media more easily than before.

For still-picture recording, the number of still pictures to be taken is accepted as the setting of the first managing criterion. A multiple of the still picture count is accepted as the setting of the second managing criterion. These settings allow the digital still camera 1 to manage the writing of the still pictures taken to the recording medium in substantially the same manner as film cameras manage the consumed volume of film in terms of the number of pictures taken per film roll, the rolls being changed as needed.

With this embodiment, the picture count is set as one of a plurality of possible numbers of still pictures that could be taken on a single roll of film by a film camera. When one of the candidate still picture counts is selected and accepted as the first managing criterion, it is possible to manage the recording medium of the digital still camera in a manner similar to the film camera dealing with rolls of film. This feature enhances the ease of operation for users familiar with the handling of conventional film cameras. In particular, if the recording medium is a CD-R or something similar that is hard to rewrite, the ease of operation is substantially the same as rolls of film on film cameras. This is an additional convenience that will be appreciated by the user.

For moving picture recording, the recordable time for taking moving pictures is accepted as the setting of the first managing criterion. A multiple of the moving picture recordable time is accepted as the setting of the second managing criterion. These settings allow the digital still camera 1 to manage the recording medium in substantially the same manner as video tape recorders managing the consumed volume of tapes in terms of the remaining recordable time per tape cassette, the tape cassettes being changed as needed. This feature applied to the recording of moving pictures makes it possible to manage recording media more easily than before.

With this embodiment, the recordable time is set as one of a plurality of typical recordable times available on a tape cassette for a video tape recorder. When one of the recordable times is selected and accepted as the first managing criterion, it is possible to manage the recording medium of the digital still camera in a manner similar to the video tape recorder dealing with tape cassettes. This feature enhances the ease of operation for users familiar with the handling of conventional video tape recorders.

After detecting the available capacity of the recording medium, the digital still camera 1 displays a maximum number of pictures that may be recorded on the recording medium with priority on the user-selected pixel count or data compression mode. The digital still camera 1 accepts the first managing criterion set as a reference recording size for use in recording the pictures taken to the recording medium, and the second managing criterion set as another reference recording size formed by an integral multiple of the reference recording size under the first managing criterion.

As described, the digital still camera 1 accepts the settings of the first and the second managing criteria within the range of the available capacity detected on the recording medium. In accordance with the first and the second managing criteria, the camera manages the recording medium in a manner allowing desired still and moving pictures to be recorded unfailingly.

Candidates from which to choose the first managing criterion are displayed in keeping with the available recording medium capacity. The selected candidate is accepted as the setting of the first managing criterion. Multiples of the accepted first managing criterion are then displayed as candidates from which to choose the second managing criterion. The selected multiple is then accepted as the setting of the second managing criterion. These steps help to simplify the user's data setting work, whereby still and moving pictures are taken and recorded unfailingly within the range of the first and the second managing criteria.

In a setup where the data size for pictures to be taken may be established as desired, candidates of the first and/or the second managing criterion are displayed so that the settings of the first and/or the second managing criterion may be accepted selectively. If the data size is determined by resolution or by data compression mode, then the settings of the first and the second managing criteria may be accepted with priority on the number of pixels or on data compression mode.

When detecting the available medium capacity and accepting the settings of the first and the second managing criteria, the digital still camera 1 first allows the user to determine where priority should be: on pixel count or on data compression mode. With either the pixel count or the data compression mode selected, the selection is paired with a temporarily determined data compression mode or pixel count. Thereafter the recordable picture count or recordable time is calculated. When the result of the calculation is displayed, the first and the second managing criteria are set accordingly. Based on these settings, the available medium capacity is checked anew and the temporarily established data compression mode or pixel count is modified correspondingly.

In this manner, the digital still camera 1 helps simply the user's work on setting up the data compression mode and pixel count which are closely related to the settings of the first and the second managing criteria. This feature contributes to improving the user's ease of operation.

Recording status of the pictures taken is displayed in accordance withy the first and/or the second managing criterion. What has been set by the data size setting means is also displayed. These features further enhance the user's ease of operation.

It might happen that the recording medium is moved from this digital still camera to another digital still camera or to a computer together with the first and the second managing criteria recorded on the medium. In such a case, the recording medium may be handled on the new apparatus in substantially the same manner as on this camera.

That is, when recording of the taken pictures to the recording medium is resumed on the new apparatus, the first and the second managing criteria can be retrieved from the medium; their settings need not be solicited and established anew. The retrieved settings allow the new apparatus to proceed with its processing.

### (1-3) Effects of the first embodiment

When the above-described structure is in use, the first managing criterion representative of the picture count or recordable time is set and accepted, followed by the second managing criterion denoting a multiple of the recordable size under the first managing criterion. The first and the second managing criteria make it possible to manage the recording of data to the recording medium more easily than before.

With the available capacity of the recording medium detected, the first and the second managing criteria are set and received within the range of the available capacity thus detected. Still pictures or moving pictures are then taken with the recording medium managed in accordance with the first and the second managing criteria. This structure permits easier handling of the recording medium than before while effectively avoiding the situation where recording would become impossible due to an exhausted recording medium capacity.

Candidates from which to choose the first managing criterion are displayed in keeping with the available recording medium capacity. The selected candidate is accepted as the setting of the first managing criterion. Multiples of the accepted first managing criterion are then displayed as candidates from which to choose the second managing criterion. The selected multiple is then accepted as the setting of the second managing criterion. These steps help to simplify the user's data setting work.

In response to a given data size set by the data size setting means, candidates from which to choose the first and/or the second managing criterion are displayed. The selected candidates are set and accepted as the first and/or the second managing criterion. This makes it possible to record taken pictures of diverse data sizes unfailingly in accordance with the first and the second managing criteria.

The data size setting means serves both as the resolution setting means for setting the resolution for pictures taken and as the data compressing means for compressing the pictures taken. This structure allows the pictures taken to be recorded at diverse resolutions and data compression rates unfailingly in accordance with the first and the second managing criteria.

It is possible to display recording status of the pictures taken in keeping the first and/or the second managing criterion. This feature also allows the user to manage the recording medium easily.

The settings made by the data size setting means are then displayed. This makes it possible to change pixel count settings as needed, whereby the user's ease of operation is further enhanced.

More specifically, for the recording of still pictures, the number of still pictures to be taken is set and accepted as the first managing criterion. A multiple of the still picture count is then set and accepted as the second managing criterion. These settings allow the recording medium to be managed in much the same way as rolls of film managed by the film camera in terms of the number of exposures per film roll and the number of film rolls consumed. This makes it possible to manage the recording medium more easily than before.

The picture count may be set as one of a plurality of candidate numbers of still pictures that could be taken on a single roll of film by a film camera. When one of the candidate still picture counts is selected and accepted as the first managing criterion, it is possible to manage the recording medium of the digital still camera in a manner similar to the film camera dealing with rolls of film, the rolls being changed as needed. This feature enhances the ease of operation for users familiar with the handling of conventional film cameras.

For moving picture recording, the recordable time for taking moving pictures is accepted as the setting of the first managing criterion. A multiple of the moving picture recordable time is accepted as the setting of the second managing criterion. These settings allow this embodiment to manage the recording medium in substantially the same manner as video tape recorders managing the consumed volume of tapes in terms of the remaining recordable time per tape cassette, the tape cassettes being changed as needed. This feature also makes it possible to manage the recording medium more easily than before.

Furthermore, the recordable time is set as one of a plurality of typical recordable times available on a tape cassette used by a video tape recorder. When one of the recordable times is selected and accepted as the first managing criterion, it is possible to manage the recording medium of the digital still camera in a manner similar to the video tape recorder dealing with tape cassettes. Hence the enhanced ease of operation for users familiar with the handling of conventional video tape recorders.

With the first and the second managing criteria recorded on the recording medium, these criteria are retrieved from the medium when the recording of taken pictures to the medium is resumed; new settings of the first and the second managing criteria need not be solicited. Thus when the recording medium is moved from this embodiment to another digital still camera or to a computer, the medium may be handled on the new apparatus in substantially the same manner as on this embodiment. Because the existing conditions found on the recording medium are retrieve and reused when the recording thereto is resumed on the new apparatus, the ease of operation is also improved.

With this embodiment, the pictures taken by the CCD imaging device 4 constituting an integrally structured picture-taking means are recorded to the memory card 17 and optical disk 27, both attached removably to the camera. This structure allows the recording medium to be managed more easily than before.

This embodiment may also be used in conjunction with recording media of an externally located entity such as a network server that may be accessed in wired or wireless fashion for data communication. In such a setup, this embodiment also renders the management of the recording media in the external entity easier than before.

### (2) Second embodiment

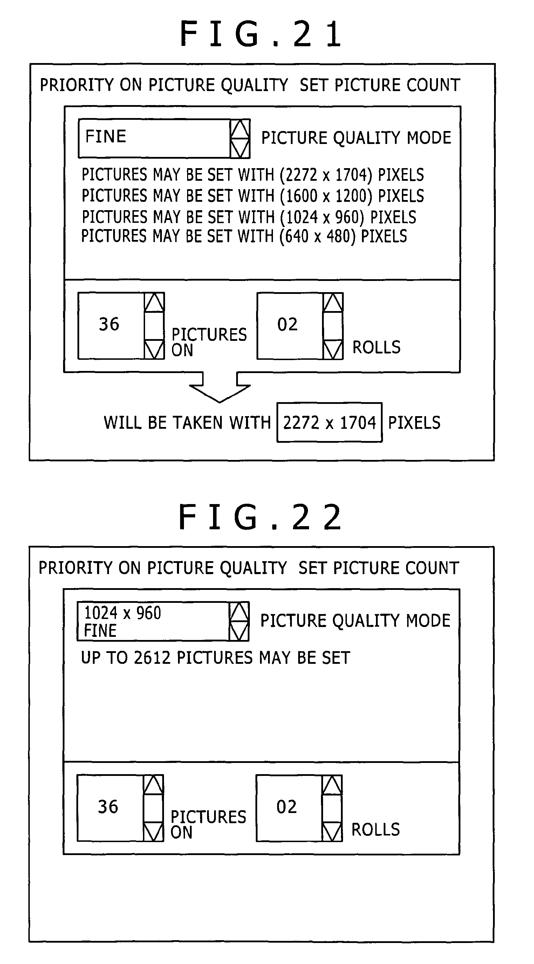

FIGs. 20 and 21 are plan views of input screens on a digital still camera practiced as the second embodiment of this invention, the two screens being in contrast with the screens in FIGs. 5 and 7 respectively. The digital still camera as the second embodiment has substantially the same structure as the first embodiment except that the CPU 5 functions differently with regard to the input screens.

Given a user-designated pixel count, the second embodiment displays a possible picture count that may be set for each of different data compression modes, as shown in FIG. 20. When the user selects a given data compression mode, the second embodiment displays a possible picture count that may be set for each of different pixel counts, as shown in FIG. 21. On this input screen, the first and the second managing criteria are set by the user and accepted by the second embodiment. The settings for moving pictures are likewise set and accepted.

As described, when the second embodiment displays more detailed picture count candidates or recordable time candidates to choose from, the user's data setting work is simplified further. The second embodiment thus provides substantially the same effects as the first embodiment.

### (3) Third embodiment

FIG. 22 is a plan view of an input screen on the digital still camera practiced as the third embodiment of the invention, the screen being in contrast with the input screen of FIG. 8. The digital still camera as the third embodiment has substantially the same structure as the first embodiment except that the CPU 5 functions differently with regard to the input screen.

Using a pull-down menu format, the third embodiment displays combinations of a pixel count and a data compression mode in the sequence of picture quality levels, as shown in FIG. 22. Through the pull-down menu, the pixel count and data compression mode are set and accepted. Given these settings, the first and the second managing criteria are established and accepted. The settings for moving pictures are likewise set and accepted.

As described, the third embodiment displays combinations of a pixel count and a data compression mode in the sequence of picture quality levels, accepts the settings of the selected pixel count and data compression mode, and thereby accepts the first and the second managing criteria. The third embodiment thus provides substantially the same effects as the first embodiment.

### (4) Fourth embodiment

With the fourth embodiment, moving pictures are recorded to the recording medium using a single file within the range of the second managing criterion. It might happen that when recording moving pictures in increments of GOPs (group of pictures), this embodiment stops the recording temporarily halfway through a given GOP and then resumes the recording. In that case, the embodiment compresses the data by setting prediction frames or the like with regard to the frames from which to resume the recording in the GOP in which the recording was stopped most recently.

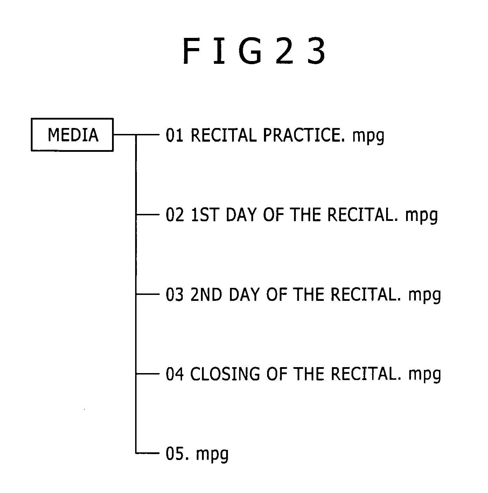

As shown in FIG. 23 in contrast with FIG. 11, the fourth embodiment thus manages the pictures taken using a single moving picture file in increments of the value under the second managing criterion. This arrangement permits post-treatment of the pictures taken in substantially the same manner as when moving pictures are recorded onto a tape cassette by the video tape recorder.

The fourth embodiment, as described, records moving pictures to the recording medium using one file within the range of the second managing criterion, thereby providing post-treatment of the taken pictures much the same way as when moving pictures are conventionally recorded onto the tape cassette by the video tape recorder. The fourth embodiment thus provides substantially the same effects as the first embodiment.

### (5) Fifth embodiment

The fifth embodiment is structured to acquire pictures taken through data communication in wired or wireless fashion and to have the first and the second managing criteria set in the same manner as the first embodiment.

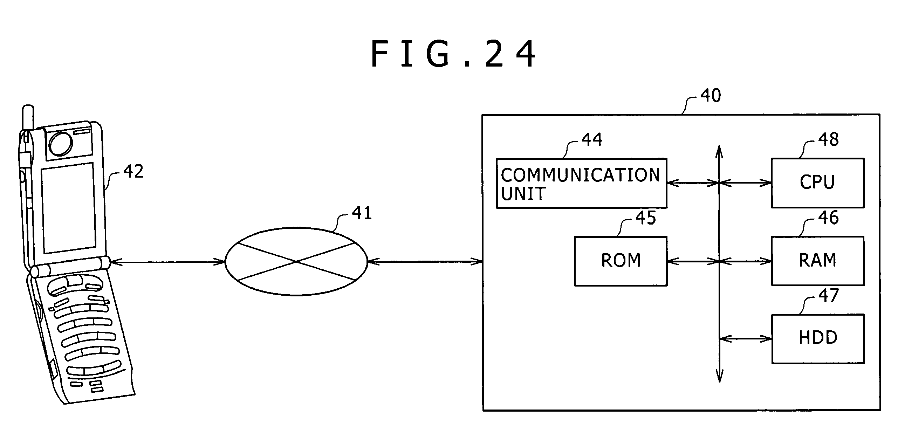

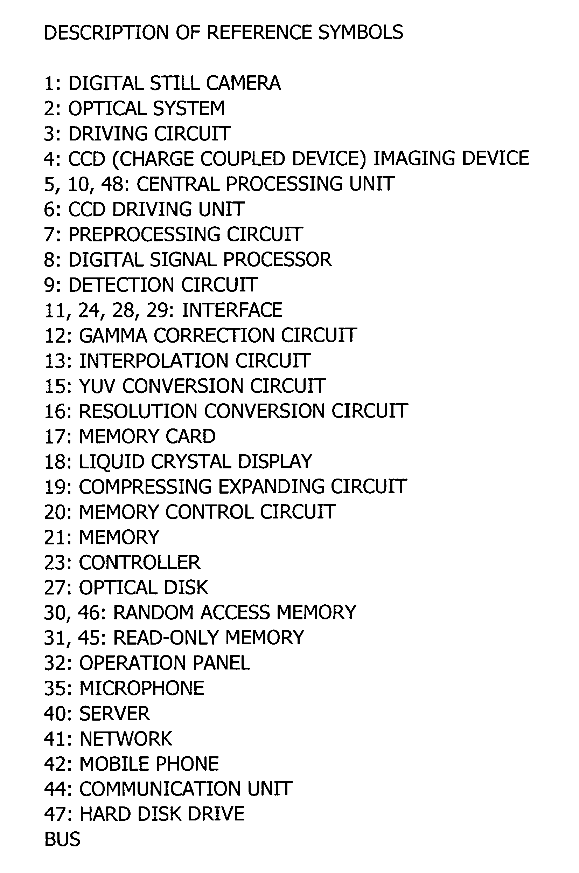

As shown in FIG. 24, this embodiment involves a server 40 that is illustratively a household computer. A portable device such as a mobile phone 42 equipped with a picture-taking capability is connected to the server 40 through a network 41 such as the Internet. When accessed by the mobile phone 42, the server 40 provides it with the above-mentioned input screens through which the settings of the first and the second managing criteria are entered and accepted from the mobile phone 42. The server 40 further sends to the mobile phone 42 picture-taking status under the first and the second managing criteria thus established, and records the still pictures or moving pictures obtained by the mobile phone 42.

The server 40 allocates a recording area for still and moving pictures taken on a hard disk drive (HDD) 47. The allocation is performed by the server 40 which, connected to the network 41 via a communication unit 44, secures a work area on a random access memory (RAM) 46 in accordance with recordings in a read-only memory (ROM) 45, before getting a central processing unit (CPU) 48 to execute a suitable program held on the hard disk drive 47. With the recording area thus allocated, the server 40 accepts the settings of the first and the second managing criteria from the mobile phone 42, and records the still or moving pictures taken by the phone 42.

By acquiring the taken pictures through data communication in wired or wireless fashion as described, the fifth embodiment also provides substantially the same effects as the first embodiment.

### (6) Sixth embodiment

This invention may be implemented in the form of an audio signal recorder as a sixth embodiment. This audio signal recorder is designed to record audio signals picked up by a microphone to the recording medium in either compressed or uncompressed format. If the signals are to be compressed, a user-designated data compression rate is adopted and the data is compressed accordingly when recorded.

With this recorder, as with the first embodiment for recording moving pictures, the settings of the first and the second managing criteria are accepted as the criteria for managing the recording medium to which audio signals are recorded. It was shown earlier that for the recording of moving pictures, the pixel count may be changed along with the data compression mode. For the recording of audio signals, by contrast, only the data compression mode may be changed; a predetermined sampling rate is adopted with respect to the pixel count in use.

With the above arrangements in place, the sixth embodiment permits easier management of the recording medium than before in recording audio signals.

When accepting the first managing criterion, the sixth embodiment first displays a plurality of typical recordable times available on a tape cassette for a tape recorder. One of the recordable times is selected and accepted as the first managing criterion. More specifically, the sixth embodiment displays a pull-down menu including 30-, 45-, 60-, 90-, and 120-minute options to be chosen by the user. The user-selected time option is accepted as the input of the first managing criterion. In this case, it is also possible for the sixth embodiment to display a plurality of typical recordable times available on a compact disc or a Mini-Disc, i.e., alternative recording media on which to store music content. One of the recordable times displayed is then selected and accepted as the first managing criterion.

Using the arrangements above, the sixth embodiment improves the ease of operation for users familiar with the handling of tape cassettes or like storage media.

This recorder is structured to display the status of recording under the first and the second managing criteria established as described, and to display the setting of the data compressing means associated with the setting of the managing criteria. These displays help to improve the ease of operation for the user. Furthermore, when the recording medium is moved from this recorder to another apparatus along with the managing criteria recorded on the medium, the recorded criteria may be retrieved from the medium and utilized by the new apparatus so that the user's ease of operation is enhanced.

### (7) Seventh embodiment

A seventh embodiment of this invention may be structured to record audio comments about each of the still pictures taken (the comments are called voice memos). The seventh embodiment may have substantially the same structure as the digital still camera 1 practiced as the first embodiment except for arrangements for implementing the voice memo feature. The seventh embodiment in the form of a digital still camera is outlined below by referring again to FIG. 1.

In the digital still camera practiced as the seventh embodiment, the CPU 5 acquires a still picture taken and, given the user's instruction to record a voice memo, causes the digital signal processor 5 to obtain an audio signal from the microphone 35 for a predetermined time period and to compress the obtained signal data. The compressed audio signal is recorded to the memory card 17 and optical disk 27 together with each picture taken. The compressed audio signal may be output through the interface 28 or 29 along with the pictures taken given an appropriate instruction from the user. The recorded voice memo may be reproduced when so instructed by the user.

With the seventh embodiment, the microphone 35 constitutes the sound acquiring means for acquiring sounds associated with each of the pictures taken. The sounds picked up by this sound acquiring means are recorded in conjunction with the corresponding pictures taken. Because the sound is acquired for the predetermined time period for each picture taken, the audio data size associated with each picture remains constant when recorded.

The CPU 5 takes the data size of the audio data into consideration when displaying possible managing criteria that can be set and accepted as the first and the second managing criteria.

As described, when allowing sounds associated with taken pictures to be recorded in combination with the latter, the seventh embodiment also provides substantially the same effects as the first embodiment.

### (8) Other embodiments

While the above-described embodiments were shown getting the management data recorded on the recording medium, this is not limitative of the invention. Alternatively, the management data may be recorded on the side of the apparatus along with an identification code for identifying the recording medium.

The fourth embodiment above was shown recoding moving pictures using a single file in increments of the second managing criterion. Alternatively, moving pictures may be processed "apparently" through the use of one file in increments of the second managing criterion.

The seventh embodiment above was shown getting voice memos recorded in connection with the still pictures taken. Alternatively, the seventh embodiment may be arranged to record voice memos in conjunction with the moving pictures taken.

The embodiments above were shown getting taken pictures and audio signals recorded under the established first and second managing criteria. However, this is not limitative of the invention. Alternatively, the first and the second managing criteria may be applied in a more flexible manner. Illustratively, halfway through an unused block, changes may be accepted in the picture count and recordable time under the first managing criterion. As another alternative, an increase in the second managing criterion may be accepted halfway through the picture-taking process as if a film roll or a tape cassette were additionally bought along the way. As a further alternative, the available space of the recording medium may not subjected as a whole to the first and the second managing criteria but may be divided into areas so that the first and the second managing criteria may be set for each of the divided areas or for a particular area among them.

The above-described embodiments were shown getting the status of recording displayed over time under the first and the second managing criteria. Alternatively, the recording status may be displayed solely upon power-up, only in response to the user's operation for status confirmation, or on other specific occasions.

The embodiments above were shown getting taken pictures managed in accordance with the first and the second managing criteria. Alternatively, the taken pictures may be managed under a third managing criterion formed by a multiple of the second managing criterion. In this case, the third managing criterion corresponds to a single putative package of film rolls or tape cassettes.

The above embodiments were shown having the settings of the first and the second managing criteria accepted for recording moving pictures, after calculating the recordable time by taking the data size of audio data into consideration. Alternatively, if the data size of the recording medium is sufficiently large in practical terms, only the data size of picture data may be referenced in getting the first and the second managing criteria set and accepted.

The above-described embodiments were shown resorting to the first and the second managing criteria when simply recording taken pictures and sounds (i.e., input signal) to the recording medium. Alternatively, this invention may be practiced extensively in applications where taken pictures and sounds are edited on a personal computer or like equipment.

This invention was shown implemented illustratively in the form of the digital still camera and server described above as preferred embodiments. However, they are not limitative of the invention. Alternatively, the invention may be implemented in the form of diverse recording devices including a memory card-furnished mobile phone with a picture-taking capability.

According to this invention, as described above, an apparatus and a method are provided to accept a first managing criterion set to represent illustratively the number of pictures taken or a recordable time, and a second managing criterion set to denote a multiple of the recordable size under the first managing criteria. When the recording of data to the recording medium is managed in accordance with the first and the second managing criteria thus set and accepted, the recording medium is managed more easily than before.

### Industrial Applicability

The present invention relates generally to a recording medium and a recording medium managing method and more particularly to a digital still camera.

## Claims

1. A recording apparatus for recording pictures taken to a recording medium, said recording apparatus comprising setting accepting sections for accepting a first managing criterion set as a reference recording size for use in recording said pictures taken to said recording medium, and a second managing criterion set as another reference recording size formed by an integral multiple of said reference recording size under said first managing criterion.

2. The recording apparatus according to claim 1, further comprising a section for detecting an available capacity of said recording medium, wherein said setting accepting section accepts the settings of said first and said second managing criteria within a range of said available capacity.

3. The recording apparatus according to claim 2, wherein said setting accepting section displays said first managing criterion which may be set in view of said available capacity, before accepting the setting of said first managing criterion.

4. The recording apparatus according to claim 2, wherein said setting accepting section displays a multiple of said first managing criterion which was set and accepted, as representative of said second managing criterion which may be set, before accepting the setting of said second managing criterion.

5. The recording apparatus according to claim 2, further comprising data size setting sections for setting a data size for said pictures taken, wherein said setting accepting sections displays said first and/or said second managing criterion which may be set in view of said data size set by said data size setting sections, before accepting the settings of said first and/or said second managing criterion.

6. The recording apparatus according to claim 5, wherein said data size setting sections serves as resolution setting sections for setting a resolution for said pictures taken.

7. The recording apparatus according to claim 5, wherein said data size setting section serves as data compressing section for compressing said pictures taken as data, and wherein said data compressing section sets said data size by having compression rates changed for the data compression.

8. The recording apparatus according to claim 6 or 7, further comprising section for displaying the settings of said data size setting section.

9. The recording apparatus according to claim 1, wherein said pictures taken are made up of still pictures taken;
wherein said first managing criterion is the number of said still pictures to be recorded; and
wherein said setting accepting section accepts said number of said still pictures to be recorded as the setting of said first managing criterion, and a multiple of said number of said still pictures to be recorded as the setting of said second managing criterion.

10. The recording apparatus according to claim 9, wherein said setting accepting section displays a plurality of picture counts to choose from, and accepts the selected picture count as the setting of said first managing criterion.

11. The recording apparatus according to claim 1, wherein said pictures taken are made up of moving pictures taken;
wherein said first managing criterion is a recording time for recording said moving pictures; and
wherein said setting accepting section accepts a multiple of said recording time as the setting of said second managing criterion.

12. The recording apparatus according to claim 11, wherein said setting accepting section displays a plurality of recording times to choose from, and accepts the selected recording time as the setting of said first managing criterion.

13. The recording apparatus according to claim 1, wherein said first and said second managing criteria are recorded to said recording medium; and wherein, upon resumption of the recording of said pictures taken to said recording medium, said setting accepting section acquires said first and said second managing criteria from said recording medium instead of obtaining the criteria through acceptance of the settings thereof.

14. The recording apparatus according to claim 1, further comprising picture-taking section for outputting said pictures taken, wherein said recording medium is removably retained.

15. The recording apparatus according to claim 1, further comprising picture taking section for outputting said pictures taken, wherein said recording medium is placed in an external device accessible for data communication in either wired or wireless fashion.

16. The recording apparatus according to claim 1, wherein said pictures taken are acquired through data communication in either wired or wireless fashion.

17. The recording apparatus according to claim 1, further comprising sound acquiring section for acquiring sounds related to each of said pictures taken;
wherein said sounds acquired by said sound acquiring section are recorded in conjunction with said pictures taken; and
wherein the setting of at least said first managing criterion is accepted by additionally taking into account a recording size reflective of said sounds.

18. A recording medium managing method comprising the steps of:
accepting a first managing criterion set as a reference recording size for use in recording input signals to a recording medium, and a second managing criterion set as another reference recording size formed by an integral multiple of said reference recording size under said first managing criterion; and
managing the recording of said input signals in reference to said first and said second managing criteria.

19. The recording medium managing method according to claim 18, further comprising the step of detecting an available capacity of said recording medium, wherein the settings of said first and said second managing criteria are accepted within a range of said available capacity.

20. The recording medium managing method according to claim 19, further comprising the step of setting a data size for said input signals, wherein a display is made of said first and/or said second managing criterion which may be set in view of said data size, before the settings of said first and/or said second managing criterion are accepted.

21. The recording medium managing method according to claim 18, further comprising the step of displaying recording status of said input signals in reference to said first and/or said second managing criterion.

22. The recording medium managing method according to claim 20, further comprising the step of displaying the setting of said data size.

23. The recording medium managing method according to claim 18, wherein said input signals are made up of still pictures taken;
wherein said first managing criterion is the number of said still pictures to be recorded; and
wherein said number of said still pictures to be recorded is accepted as the setting of said first managing criterion, and a multiple of said number of said still pictures to be recorded is accepted as the setting of said second managing criterion.

24. The recording medium managing method according to claim 23, further comprising the step of displaying a plurality of picture counts to choose from, the selected picture count being accepted as the setting of said first managing criterion.

25. The recording medium managing method according to claim 18, wherein said input signals are made up of moving pictures taken;
wherein said first managing criterion is a recording time for recording said moving pictures; and
wherein a multiple of said recording time is accepted as the setting of said second managing criterion.

26. The recording medium managing method according to claim 25, further comprising the step of displaying a plurality of recording times to choose from, the selected recording time being accepted as the setting of said first managing criterion.

27. The recording medium managing method according to claim 18, further comprising the steps of:
recording said first and said second managing criteria to said recording medium; and
upon resumption of the recording of said input signals to said recording medium, acquiring said first and said second managing criteria from said recording medium instead of obtaining the criteria through acceptance of the settings thereof.

28. The recording medium managing method according to claim 18, further comprising the step of acquiring sounds related to each of said input signals;
wherein said sounds are recorded in conjunction with said input signals; and
wherein the setting of at least said first managing criterion is accepted by additionally taking into account a recording size reflective of said sounds.
